(19) Europäisches Patentamt
European Patent Office
Office européen des brevets

(11) **EP 4 016 402 B1**

(12) **FASCICULE DE BREVET EUROPEEN**

(45) Date de publication et mention de la délivrance du brevet:
**02.10.2024 Bulletin 2024/40**

(51) Classification Internationale des Brevets (IPC):
*G06N 10/40* *(2022.01)*

(21) Numéro de dépôt: **21212326.9**

(52) Classification Coopérative des Brevets (CPC):
**G06N 10/40**

(22) Date de dépôt: **03.12.2021**

(54) **DISPOSITIF QUANTIQUE A SIGNAUX DE SORTIE D'ELECTROMETRES MULTIPLEXES**

QUANTENVORRICHTUNG MIT AUSGANGSSIGNALEN VON MULTIPLEX-ELEKTROMETERN

QUANTUM DEVICE WITH MULTIPLEX ELECTROMETER OUTPUT SIGNALS

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **10.12.2020 FR 2012968**

(43) Date de publication de la demande:
**22.06.2022 Bulletin 2022/25**

(73) Titulaires:
• **Commissariat à l'énergie atomique et aux énergies alternatives 75015 Paris (FR)**
• **Centre National de la Recherche Scientifique 75794 Paris Cedex 16 (FR)**

(72) Inventeurs:
• **MOREL, Adrien 38054 GRENOBLE CEDEX 09 (FR)**
• **BILLIOT, Gérard 38054 GRENOBLE CEDEX 09 (FR)**
• **PILLONNET, Gaël 38054 GRENOBLE CEDEX 09 (FR)**
• **MEUNIER, Tristan 38042 GRENOBLE CEDEX 09 (FR)**

(74) Mandataire: **Brevalex Tour Trinity 1 B Place de la Défense 92400 Courbevoie (FR)**

(56) Documents cités:
• MEUNIER T ET AL: "Qubit read-out in Semiconductor quantum processors: challenges and perspectives", 2019 IEEE INTERNATIONAL ELECTRON DEVICES MEETING (IEDM), IEEE, 7 December 2019 (2019-12-07), XP033714445, DOI: 10.1109/IEDM19573.2019.8993534
• XIAO XUE ET AL: "CMOS-based cryogenic control of silicon quantum circuits", ARXIV.ORG, CORNELL UNIVERSITY LIBRARY, 201 OLIN LIBRARY CORNELL UNIVERSITY ITHACA, NY 14853, 29 September 2020 (2020-09-29), XP081773983
• GUEVEL LOICK LE ET AL: "19.2 A 110mK 295 W 28nm FDSOI CMOS Quantum Integrated Circuit with a 2.8GHz Excitation and nA Current Sensing of an On-Chip Double Quantum Dot", 2020 IEEE INTERNATIONAL SOLID- STATE CIRCUITS CONFERENCE - (ISSCC), IEEE, 16 February 2020 (2020-02-16), pages 306 - 308, XP033754490, DOI: 10.1109/ISSCC19947.2020.9063090
• LE GUEVEL L ET AL: "Low-power transimpedance amplifier for cryogenic integration with quantum devices", APPLIED PHYSICS REVIEWS, AMERICAN INSTITUTE OF PHYSICS, 2 HUNTINGTON QUADRANGLE, MELVILLE, NY 11747, vol. 7, no. 4, 4 December 2020 (2020-12-04), XP012252000, DOI: 10.1063/5.0007119

**EP 4 016 402 B1**

- TAGLIAFERRI MARCO LORENZO VALERIO ET AL: "Modular Printed Circuit Boards for Broadband Characterization of Nanoelectronic Quantum Devices", IEEE TRANSACTIONS ON INSTRUMENTATION AND MEASUREMENT, IEEE SERVICE CENTER, PISCATAWAY, NJ, US, vol. 65, no. 8, 1 August 2016 (2016-08-01), pages 1827 - 1835, XP011616601, ISSN: 0018-9456, [retrieved on 20160712], DOI: 10.1109/TIM.2016.2555178
- HORNIBROOK J. M. ET AL: "Frequency multiplexing for readout of spin qubits", vol. 104, no. 10, 18 December 2013 (2013-12-18), US, pages 103108, XP055795313, ISSN: 0003-6951, Retrieved from the Internet <URL:https://arxiv.org/pdf/1312.5064.pdf> DOI: 10.1063/1.4868107
- JEROEN P G VAN DIJK ET AL: "The electronic interface for quantum processors", ARXIV.ORG, CORNELL UNIVERSITY LIBRARY, 201 OLIN LIBRARY CORNELL UNIVERSITY ITHACA, NY 14853, 5 November 2018 (2018-11-05), XP081123645

**Description**

**DOMAINE TECHNIQUE ET ART ANTERIEUR**

L'invention concerne le domaine des dispositifs quantiques, du traitement de l'information quantique et de l'informatique quantique.

L'informatique quantique est basée sur l'utilisation d'un état quantique à deux niveaux mesurables comme vecteur d'information, appelé qubit ou bit quantique ou encore « quantum bit » en anglais, et des lois de la mécanique quantique (superposition, intrication, mesure) afin d'exécuter des algorithmes. Un dispositif, ou calculateur, quantique à qubits de spin permet de manipuler l'état quantique de ces qubits, notamment dans le but de réaliser des opérations.

Contrairement à une machine électronique ou informatique dite classique (fonctionnant avec deux niveaux de tension définis comme correspondant à des états binaires 0 et 1), un dispositif quantique s'approche d'une machine analogique, dans le sens où l'état quantique des qubits peut prendre une infinité de valeurs.

Les applications envisagées pour les dispositifs quantiques sont multiples, allant de la simulation de molécule pour la médecine et la conception de nouveaux vaccins et médicaments aux applications en cryptographie (mise en oeuvre de l'algorithme de Shor) en passant par l'apprentissage automatique (« machine learning » en anglais) et la simulation de phénomènes quantiques.

Les qubits de spin peuvent être formés dans du semi-conducteur, avantageusement du silicium. Les technologies semi-conductrices sont étudiées pour la réalisation de qubits de spin en raison de leur haut potentiel d'intégration, à l'image de l'électronique classique. Des électrons ou des trous sont individuellement confinés dans des puits quantiques maintenus à des températures cryogéniques (inférieures à 1 K) dans un cryostat et réalisés au sein de structures de confinement de tailles nanométriques définies de manière électrostatique et, dans le cas du silicium, d'architecture proche de celle des MOSFETs. Ces structures de confinement correspondent à des boîtes quantiques, également appelées « quantum dots » en anglais. Une boîte quantique se comporte comme un puits de potentiel confinant une ou plusieurs charges élémentaires (électrons ou trous) dans une région de semi-conducteur.

L'application d'un champ magnétique statique (par exemple compris entre 100 mT et 1 T) permet de faire apparaître le spin des quasi-particules qui est un système quantique à deux niveaux mesurables, nommés « spin down » et « spin up ». Leur état quantique est une superposition de ces deux états représentés par la direction d'une flèche au sein d'une sphère, nommée sphère de Bloch. La manipulation (rotation) de ces spins est effectuée à l'aide d'une composante alternative du champ magnétique (de fréquence par exemple comprise entre 1 GHz et plusieurs dizaines de GHz) ou à l'aide d'un champ électrique alternatif aux mêmes fréquences dans le cas d'une interaction spin-orbite suffisante (cas des trous dans le silicium). La lecture des spins (up ou down) permet d'extraire une partie de l'information quantique selon sa probabilité d'être dans chaque état, déterminée par la superposition quantique.

La lecture d'un qubit de spin est réalisée en utilisant une autre boîte quantique appelée par exemple boîte quantique de lecture et couplée à celle du qubit de spin destiné à être lu. Ces deux boîtes quantiques forment deux puits de potentiel séparés par une barrière de potentiel. Chacune des deux boîtes quantiques comporte une grille de commande électrostatique disposée sur une première région de semi-conducteur dans laquelle sont formés les puits de potentiel des boîtes quantiques. Les puits de potentiel sont disposés entre des deuxièmes régions de semi-conducteur formant des réservoirs de porteurs de charge, appelées source et drain par analogie avec la technologie MOSFET. Le spin de la quasi-particule (électron ou trou) présente dans la boîte quantique du qubit destiné à être lu est utilisé comme « spin de référence » tandis que le spin de la quasi-particule présente dans la boîte quantique de lecture est mesuré après avoir été manipulé.

Une première méthode de lecture des qubits de spin consiste à mesurer la capacité entre la boîte quantique du qubit destiné à être lu et la boîte quantique de lecture, qui correspond à une image de leurs états relatifs. Pour cela, un dispositif dit de réflectométrie est généralement utilisé. Un signal haute fréquence (par exemple comprise entre 100 MHz et quelques GHz) est envoyé sur la grille de la boîte quantique de lecture depuis des instruments de test placés à température ambiante. Le signal est réfléchi et est ensuite démodulé. Une inductance est placée en bout de ligne au niveau du qubit afin de créer un résonateur LC composé de cette inductance, d'une capacité parasite et de la capacité quantique $C_q$ formées par le qubit. Lorsque la valeur de $C_q$ varie, la phase et l'amplitude du signal réfléchi varient, ce qui peut être détecté par les instruments de mesure placés à température ambiante. Il est ainsi possible de connaître l'état relatif (parallèle ou anti-parallèle) du spin de l'électron présent dans la boîte quantique de lecture en fonction de l'état du spin de l'électron présent dans la boîte quantique du qubit destiné à être lu.

Avec cette première méthode de lecture, il est nécessaire soit de sortir un nombre de fils égal au nombre de qubits à exciter, ce qui devient impossible quand le nombre de qubits est important, par exemple plus de 1000, soit d'envoyer plusieurs signaux à différentes fréquences par le même fil et de discriminer ces fréquences grâce aux résonateurs LC placés à température cryogénique. Dans cette dernière solution, il est donc nécessaire que la fréquence de résonance du résonateur LC associée à chaque qubit soit calibrée et différente pour chaque résonateur. Il existe ainsi un compromis entre espacement fréquentiel entre chaque qubit (défini par le facteur de qualité des résonateurs LC, car plus le facteur de qualité est important, plus le nombre de qubits adressés par une seule ligne peut être grand), surface prise par les inductances (plus une inductance est petite, plus son facteur de qualité est faible) et temps pris par la lecture (inversement proportionnel au facteur de qualité du résonateur LC) à trouver.

De plus, avec cette première méthode de lecture, l'utilisation de noyaux magnétiques pour favoriser l'intégration des inductances est limitée par le fort champ magnétique statique nécessaire pour faire apparaître le spin des quasi-particules et qui sature les perméabilités magnétiques des noyaux. Les inductances à air ne rencontrent pas ce problème, mais elles occupent une surface bien plus importante, limitant leur utilisation massive à l'intérieur du cryostat.

Les couplages inter-inductances peuvent également poser de nouveaux problèmes, lors d'une mesure simultanée de qubits avec l'utilisation de plusieurs de ces inductances excitées par les signaux de réflectométrie.

Une deuxième méthode consiste à mesurer la conductance d'un électromètre couplé à la boîte quantique du qubit destiné à être lu, cette conductance étant une image de l'état du qubit. En effet, grâce à l'effet Zeeman (séparation d'un niveau d'énergie atomique d'un atome en plusieurs sous-niveaux d'énergie distincts sous l'effet d'un champ magnétique externe), lorsque le spin de la quasi-particule est orienté vers le haut, il se trouve nécessairement sur l'état d'énergie « haut » (état que nous nommerons H). Inversement, si le spin de la quasi-particule est orienté vers le bas, la quasi-particule se trouve sur un état d'énergie « bas » (état que nous nommerons L). En plaçant le niveau d'énergie du réservoir à proximité d'une boîte quantique entre H et L, la quasi-particule aura tendance à s'échapper de la boîte quantique quand elle est dans l'état H et à rester dans la boîte quantique quand elle est dans l'état L (blocage de Pauli). Il est ainsi possible de convertir le spin de la quasi-particule en une information de charge (quasi-particule présente ou non dans la boîte quantique), cette conversion étant couramment appelée « spin-to-charge conversion ». Cette information de charge peut être lue par un électromètre tel qu'un transistor à un électron (« Single Electron Transistor » en anglais, ou SET) ou un contact ponctuel quantique (« Quantum Point Contact » en anglais, ou QPC), dont la conductance varie en fonction de son environnement électrostatique.

Avec cette deuxième méthode, la variation de spin de la quasi-particule est convertie en une variation de charge de la boîte quantique (grâce au blocage de Pauli) qui entraine une variation de la conductance de l'électromètre, ce qui se traduit par une variation du courant circulant dans l'électromètre. Ce courant peut ensuite être amplifié par un amplificateur de transimpédance (également appelé TIA pour « TransImpedance Amplifier » en anglais). Habituellement, cette lecture est utilisée avec un TIA placé à température ambiante connecté à un électromètre. Il n'est donc pas possible d'utiliser cette solution pour adresser un grand nombre de qubits, par exemple une matrice entière de qubits, car il serait nécessaire soit de sortir un nombre de fils au moins égal au nombre de qubits adressés, ce qui demande une place beaucoup trop importante, soit de disposer tous les TIA dans le cryostat, ce qui n'est pas possible compte tenu des capacités de refroidissement des cryostats actuels (1W maximum pour un fonctionnement à 4K, ou 1mW pour un fonctionnement à 100mK). De plus, la vitesse de lecture d'une telle solution est limitée par la capacité des fils (comprise entre 100 et 300 pF) à charger en amont des TIAs placés à température ambiante. La bande passante d'un tel système ne pourrait que difficilement dépasser la dizaine de kHz.

Le document T. MEUNIER et al., « Qubit readout in Semiconductor quantum processors: challenges and perspectives », 2019 IEEE International Electron Devices Meeting (IEDM), IEEE, 7 décembre 2019, décrit un dispositif quantique comportant plusieurs qubits de spin comprenant chacun une boite quantique, plusieurs électromètres chacun couplé de manière électrostatique à un puits de potentiel de la boîte quantique d'un des qubits de spin, dans lequel des signaux d'excitation alternatifs de fréquences différentes sont appliqués sur des électrodes d'entrée des électromètres.

## EXPOSÉ DE L'INVENTION

Un but de la présente invention est de proposer un dispositif quantique pouvant comporter un nombre important de qubits, par exemple au moins 1000 qubits, et ne présentant pas les inconvénients liés aux méthodes de lecture des qubits de l'art antérieur.

Pour cela, la présente invention propose un dispositif quantique tel que spécifié dans la revendication 1.

Dans ce dispositif quantique, les signaux de sortie délivrés par les électromètres sont multiplexés sur l'entrée du TIA. Le démultiplexage de ces signaux est réalisé ensuite en sortie du TIA. Ainsi, le dispositif quantique peut lire plusieurs qubits, avantageusement un nombre important de qubits (par exemple plus de 1000), en faisant appel à un nombre de TIAs bien inférieur au nombre de qubits.

La mise en oeuvre d'un tel multiplexage - démultiplexage des signaux de sortie des électromètres est possible grâce aux signaux d'excitation appliqués en entrée des électromètres qui permettent d'associer une certaine caractéristique ou particularité à chacun des électromètres, et donc à chacun des qubits lus, et de retrouver la provenance des signaux de sortie des électromètres, après le démultiplexage, grâce à ces caractéristiques qui se retrouvent dans les signaux de sortie des électromètres.

Dans tout le document, l'expression « couplé électriquement » peut désigner soit une liaison électrique directe, soit une liaison électrique indirecte, c'est-à-dire réalisée à travers un ou plusieurs éléments intermédiaires.

Le signal d'excitation appliqué en entrée de chaque électromètre correspond à un signal modifiant le courant généré en sortie par cet électromètre. Le courant sortant de l'électromètre contient l'information discriminante apportée par le signal d'excitation qui lui est appliqué en entrée.

Lorsque l'électromètre correspond à un transistor à un électron, si le signal d'excitation est appliqué sur une grille de commande électrostatique de l'électromètre, ce signal d'excitation fait varier les niveaux d'énergie interne de l'électromètre.

Dans tout le document, les termes « ligne » et « colonne » ont été choisis de manière arbitraire. Dans un plan, le terme « ligne » est généralement associé à une disposition horizontale et le terme « colonne » est généralement associé à une disposition verticale. Ces termes ne doivent toutefois pas être interprétés uniquement selon cette disposition, mais comme désignant, dans un plan, deux orientations sensiblement perpendiculaires l'une par rapport à l'autre. Par exemple, le terme « ligne » peut être associé, dans un plan, à une disposition verticale, et le terme « colonne » peut être associé à une disposition horizontale.

Le dispositif quantique peut comporter en outre un cryostat incluant une chambre configurée pour être maintenue à une température inférieure ou égale à 4K et dans laquelle sont disposés au moins les qubits de spin, les électromètres, les circuits d'application des signaux d'excitation, l'amplificateur de transimpédance et le circuit de démultiplexage. Cette configuration est possible grâce au fait que chaque électromètre n'est pas associé à son propre TIA.

Dans une autre configuration, le dispositif quantique peut comporter en outre un cryostat incluant une chambre configurée pour être maintenue à une température inférieure ou égale à 4K et dans laquelle sont disposés au moins les qubits de spin, les électromètres et l'amplificateur de transimpédance.

Il est avantageux que les circuits d'application des signaux d'excitation soient au même niveau de température que le circuit de démultiplexage, car cela permet de simplifier la réalisation du démultiplexage (qui utilise dans ce cas les signaux d'excitation).

De manière avantageuse :

- la chambre du cryostat peut comporter une première partie configurée pour être maintenue à une température inférieure à 1K et une deuxième partie configurée pour être maintenue à une température comprise entre 1K et 4K ;
- les qubits de spin, les électromètres et l'amplificateur de transimpédance peuvent être disposés dans la première partie de la chambre du cryostat ;
- les circuits d'application des signaux d'excitation et le circuit de démultiplexage peuvent être disposés dans la deuxième partie de la chambre du cryostat.

Là encore, cette configuration avantageuse est possible grâce au fait que le TIA est mutualisé et utilisé pour la lecture de plusieurs électromètres.

Le dispositif quantique peut comporter en outre des circuits de polarisation des électromètres configurés pour appliquer des tensions de polarisation continues sur les électromètres.

Les circuits d'application d'au moins un signal d'excitation sur au moins une électrode d'entrée de chacun des électromètres sont configurés pour appliquer des signaux d'excitation alternatifs sur les électrodes d'entrée de chacun des électromètres. Ces signaux d'excitation comportent chacun au moins une composante alternative, et éventuellement une composante continue.

Les électromètres peuvent correspondre à des transistors à un électron (ou SET) et/ou à des contacts ponctuels quantiques (ou QPC).

Lorsque les électromètres correspondent à des transistors à un électron, les circuits d'application des signaux d'excitation peuvent être couplés à la grille ou à la source ou au drain de chacun des transistors à un électron, ou peuvent être couplés à la grille et à la source de chacun des transistors à un électron, ou peuvent être couplés à la grille et au drain de chacun des transistors à un électron. La ou les électrodes sur lesquelles le signal d'excitation est appliqué corresponde(nt) à la ou aux électrodes d'entrée de l'électromètre. Si le signal d'excitation est appliqué sur la source ou le drain de l'électromètre, l'électrode de sortie correspond respectivement au drain ou à la source de l'électromètre. Si le signal d'excitation n'est appliqué que sur la grille de l'électromètre, l'électrode de sortie peut correspondre au drain ou à la source de l'électromètre.

Lorsque les électromètres correspondent à des contacts ponctuels quantiques, les circuits d'application des signaux d'excitation peuvent être couplés à une première de deux électrodes (également appelées conducteurs ou régions conductrices du contact ponctuel quantique, et qui sont disposées en vis-à-vis l'une de l'autre) de chacun des contacts ponctuels quantiques, formant alors l'électrode d'entrée de l'électromètre. L'électrode de sortie correspond à la deuxième des deux électrodes de chacun des contacts ponctuels quantiques.

Le dispositif quantique peut comporter en outre des circuits de polarisation des électromètres configurés pour :

- lorsque les électromètres correspondent à des transistors à un électron, appliquer des tensions de polarisation continues sur une grille et un drain de chacun des transistors à un électron lorsque les circuits d'application des signaux d'excitation sont couplés à la grille et/ou au drain de chacun des transistors à un électron, ou sur une grille et une source de chacun des transistors à un électron lorsque les circuit d'application des signaux d'excitation sont couplés à la grille et/ou à la source de chacun des transistors à un électron ;
- lorsque les électromètres correspondent à des contacts ponctuels quantiques, appliquer des tensions de polarisation continues sur la première des deux électrodes de chacun des contacts ponctuels quantiques, c'est-à-dire les électrodes sur lesquelles les signaux d'excitation sont appliqués.

Les tensions de polarisation continues sont distinctes des signaux d'excitation alternatifs. Selon les modes de réalisation, les tensions de polarisation continues appliquées aux électromètres peuvent être identiques ou différentes.

Selon un exemple de réalisation, les circuits de polarisation des électromètres peuvent comporter au moins :

- un convertisseur numérique - analogique, configuré pour recevoir en entrée au moins un signal numérique codant des valeurs de tensions de polarisation des électromètres ;
- un démultiplexeur comprenant une entrée couplée électriquement à une sortie du convertisseur numérique - analogique, et plusieurs sorties sur lesquelles les tensions de polarisation des électromètres sont destinées à être délivrées ;
- des échantillonneurs - bloqueurs comprenant chacun une entrée couplée électriquement à une sortie du démultiplexeur.

Les qubits sont agencés en formant une matrice de qubits.

Les électromètres peuvent être agencés en formant une matrice d'électromètres disposée en regard de la matrice de qubits telle que la boîte quantique de chacun des qubits soit couplée de manière électrostatique à une boîte quantique d'un des électromètres.

Chacun des circuits d'application d'au moins un signal d'excitation est configuré pour appliquer un même signal d'excitation sur les électrodes d'entrée d'électromètres couplés à des qubits agencés sur une même ligne de la matrice de qubits.

Les électrodes de sortie d'électromètres couplés à des qubits agencés sur une même colonne de la matrice de qubits peuvent être couplées à l'entrée d'un même amplificateur de transimpédance.

Le dispositif quantique peut être tel que :

- chacun des circuits d'application d'au moins un signal d'excitation peut former un premier circuit d'application d'au moins un premier signal d'excitation configuré pour appliquer un même premier signal d'excitation sur des premières électrodes d'entrée d'électromètres couplés à des qubits agencés sur une même ligne de la matrice de qubits ;
- le dispositif quantique comporte en outre des deuxièmes circuits d'application d'au moins un deuxième signal d'excitation, chacun configuré pour appliquer un même deuxième signal d'excitation sur des deuxièmes électrodes d'entrée d'électromètres couplés à des qubits agencés sur une même colonne de la matrice de qubits ;

- lesdits premiers et deuxièmes circuits d'application sont configurés tels qu'une valeur d'au moins un paramètre parmi la fréquence, la phase et l'amplitude maximale de chacun des premiers et deuxièmes signaux d'excitation soit différente de celle des autres signaux d'excitation ;
- l'entrée de l'amplificateur de transimpédance est couplée électriquement à une électrode de sortie de chacun des électromètres.

Le dispositif quantique peut comporter en outre :

- un circuit de numérisation comprenant des entrées couplées à des sorties du circuit de démultiplexage et configuré pour numériser les signaux de sortie destinés à être délivrés par le circuit de démultiplexage, ou
- un convertisseur analogique - numérique interposé entre l'entrée du circuit de démultiplexage et la sortie de l'amplificateur de transimpédance.

Lorsque le circuit de numérisation comprend des entrées couplées à des sorties du circuit de démultiplexage, le démultiplexage réalisé est donc analogique.

Lorsque le convertisseur analogique - numérique est interposé entre le circuit de démultiplexage et l'amplificateur de transimpédance, le démultiplexage réalisé est donc numérique. Un démultiplexage numérique a pour avantage, par rapport à un démultiplexage analogique, de pouvoir être mis en oeuvre avec moins de démultiplexeurs. Par contre, cela nécessite d'avoir des convertisseurs analogique-numérique devant fonctionner à haute fréquence, consommant peu d'énergie et introduisant peu de bruit de quantification. De plus, un démodulateur numérique est plus complexe à réaliser qu'un démodulateur analogique.

Lorsque le dispositif quantique comporte le circuit de numérisation :

- le circuit de démultiplexage peut comporter plusieurs mélangeurs comprenant chacun une première entrée couplée électriquement à la sortie de l'amplificateur de transimpédance et une deuxième entrée configurée pour recevoir l'un des signaux d'excitation ;
- le circuit de numérisation peut comporter plusieurs intégrateurs, ou plus généralement un ensemble de cellules de filtrage, comprenant chacun une entrée couplée électriquement à une sortie d'un des mélangeurs, et plusieurs comparateurs, ou plus généralement des convertisseurs analogique-numérique, comprenant chacun une entrée couplée électriquement à une sortie d'un des intégrateurs.

Lorsque le dispositif quantique comporte le cryostat et le circuit de numérisation, les circuits d'application des signaux d'excitation, le circuit de démultiplexage et le circuit de numérisation peuvent être disposés dans la chambre du cryostat.

Dans ce cas :

- la chambre du cryostat peut comporter une première partie configurée pour être maintenue à une température inférieure à 1K et une deuxième partie configurée pour être maintenue à une température comprise entre 1K et 4K ;
- les qubits de spin, les électromètres et l'amplificateur de transimpédance peuvent être disposés dans la première partie de la chambre du cryostat ;
- les circuits d'application des signaux d'excitation, le circuit de démultiplexage et le circuit de numérisation peuvent être disposés dans la deuxième partie de la chambre du cryostat.

La fréquence de chacun des signaux d'excitation peut être différente de celle des autres signaux d'excitation, et ces fréquences peuvent être par exemple comprises entre 1 kHz et 1 MHz lors d'une caractérisation des qubits de spin et des électromètres, ou entre 1 MHz et 1 GHz lors d'une lecture des qubits de spin.

## BRÈVE DESCRIPTION DES DESSINS

La présente invention sera mieux comprise à la lecture de la description d'exemples de réalisation donnés à titre purement indicatif et nullement limitatif en faisant référence aux dessins annexés sur lesquels :

- la figure 1 représente schématiquement un dispositif quantique selon un premier mode de réalisation ;
- les figures 2 à 5 représentent des exemples de signaux obtenus dans le dispositif quantique selon le premier mode de réalisation ;
- la figure 6 représente un exemple de réalisation d'un circuit de polarisation d'électromètres du dispositif quantique, objet de la présente invention ;
- la figure 7 représente un exemple de réalisation de circuits destinés à appliquer des signaux d'excitation sur des électrodes d'entrée d'électromètres d'un dispositif quantique, objet de la présente invention ;
- la figure 8 représente un exemple de réalisation de circuits de démultiplexage et de circuits de numérisation d'un dispositif quantique, objet de la présente invention ;
- les figures 9 et 10 représentent des exemples de réalisation d'un mélangeur, d'un intégrateur et d'un comparateur d'un circuit de démultiplexage d'un dispositif quantique, objet de la présente invention ;
- la figure 11 représente un exemple de réalisation d'un convertisseur analogique - numérique et d'un circuit de démultiplexage d'un dispositif quantique, objet de la présente invention ;
- la figure 12 représente schématiquement une partie d'un dispositif quantique, objet de la présente invention, selon un deuxième mode de réalisation ;

- la figure 13 représente schématiquement une partie d'un dispositif quantique, objet de la présente invention, selon une variante du deuxième mode de réalisation.

Des parties identiques, similaires ou équivalentes des différentes figures décrites ci-après portent les mêmes références numériques de façon à faciliter le passage d'une figure à l'autre.

Les différentes parties représentées sur les figures ne le sont pas nécessairement selon une échelle uniforme, pour rendre les figures plus lisibles.

Les différentes possibilités (variantes et modes de réalisation) doivent être comprises comme n'étant pas exclusives les unes des autres et peuvent se combiner entre elles.

## EXPOSÉ DÉTAILLÉ DE MODES DE RÉALISATION PARTICULIERS

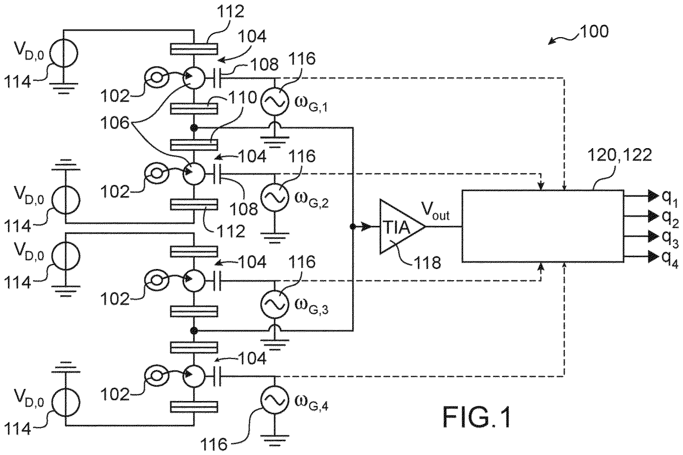

Un exemple de réalisation d'un dispositif quantique 100 selon un premier mode de réalisation est décrit ci-dessous en lien avec la figure 1.

Le dispositif 100 comporte plusieurs qubits de spin comprenant chacun au moins une boite quantique 102. Dans l'exemple de réalisation représenté sur la figure 1, quatre qubits de spin sont représentés. Toutefois, le dispositif 100 peut comporter un nombre de qubits différents, par exemple entre 2 et 10000 qubits.

Les qubits du dispositif 100 correspondent à des qubits de spin réalisés dans une couche de semi-conducteur, par exemple de silicium ou du germanium. Les charges dont le spin est destiné à être lu peuvent correspondre à des électrons ou à des trous.

Le dispositif 100 comporte plusieurs électromètres 104 chacun couplé de manière électrostatique à un puits de potentiel de la boîte quantique 102 d'un des qubits de spin. Dans l'exemple de réalisation représenté sur la figure 1, quatre électromètres 104 sont représentés.

En outre, dans l'exemple de réalisation de la figure 1, les électromètres 104 correspondent à des transistors à un électron, ou SET. Chacun des électromètres 104 comporte une boîte quantique 106 couplée de manière électrostatique à celle du qubit auquel l'électromètre 104 est couplé. Chacun des électromètres 104 de type SET comporte en outre une grille 108, une source 110 et un drain 112.

Sur l'exemple de la figure 1, les sources 110 des quatre électromètres 104 sont reliées électriquement entre elles et forment des électrodes de sortie des électromètres 104, et les grilles 108 et les drains 112 des électromètres forment des électrodes d'entrée des électromètres 104.

En variante, les électromètres 104 peuvent correspondre à des contacts ponctuels quantiques, ou QPCs. Dans ce cas, chaque QPC comporte deux électrodes (également appelées conducteurs ou régions conductrices du QPC, et qui sont disposées en vis-à-vis l'une de l'autre), une première des deux électrodes de chaque QPC formant une électrode d'entrée du QPC et une deuxième des deux électrodes de chaque QPC formant une électrode de sortie du QPC. Des détails de réalisation de tels QPCs sont par exemples décrits dans le document « Fast single-charge sensing with a rf quantum point contact » de D.J. Reilly et al., APPLIED PHYSICS LETTERS 91, 162101, 2007.

Le dispositif 100 comporte en outre des circuits 114 de polarisation des électromètres 104 configurés pour, lorsque les électromètres 104 correspondent à des SETs comme c'est le cas sur la figure 1, appliquer des tensions de polarisation continues sur les électrodes d'entrée des SETs, c'est-à-dire sur la grille 108 et le drain 112 de chacun des SETs en considérant la configuration représentée sur la figure 1. Sur l'exemple de la figure 1, les circuits 114 sont représentés symboliquement par quatre générateurs de tensions continues couplés électriquement aux drains 112 des SETs 104 et générant des tensions continues appelées $V_{D,0}$. Sur l'exemple de la figure 1, tous les SETs 104 sont polarisés avec des tensions continues $V_{D,0}$ de même valeur. En variante, il est possible que les SETs 104 soient polarisés avec des tensions continues de valeurs différentes. Les liaisons électriques entre les grilles 108 des SETs 104 et les circuits 114 ne sont pas représentées.

Lorsque les électromètres 104 correspondent à des QPC, les circuits 114 sont configurés pour appliquer des tensions de polarisation continues sur la première des deux électrodes servant d'électrode d'entrée de chacun des QPC. En considérant l'exemple de la figure 1, cela revient à appliquer les tensions continues $V_{D,0}$ (de valeurs identiques ou différentes) sur la première des deux électrodes de chaque QPC.

La polarisation des électromètres 104 est réalisée de manière à obtenir une forte différence de conductance au sein des électromètres 104 selon l'orientation du spin des charges dans les qubits, ce qui va se traduire par des signaux de sortie d'amplitudes différentes selon l'orientation du spin des charges. Par exemple, le courant traversant un électromètre 104 de type SET peut être de l'ordre du pA si un électron présent dans la boîte quantique 102 couplée de manière électrostatique à celle du SET a son spin orienté vers le bas, et de l'ordre du nA si l'électron a son spin orienté vers le haut.

Le dispositif 100 comporte en outre des circuits 116 d'application d'au moins un signal d'excitation sur au moins une électrode d'entrée de chacun des électromètres 104. Ces circuits 116 sont configurés tels qu'une valeur d'au moins un paramètre parmi la fréquence, la phase et l'amplitude maximale de chacun des signaux d'excitation soit différente de celle des autres signaux d'excitation. Dans l'exemple de réalisation décrit en lien avec la figure 1, les signaux d'excitation correspondent à des signaux périodiques, par exemple sinusoïdaux, appelés $w_{G,1}$, $w_{G,2}$, $w_{G,3}$, $w_{G,4}$ et ayant des fréquences différentes les unes des autres, appelées $f_1$ à $f_4$. Dans

l'exemple de réalisation décrit ici, $f_1$ = 10 MHz, $f_2$ = 11 MHz, $f_3$ = 12 MHz, $f_4$ = 13 MHz.

Dans l'exemple de réalisation représenté sur la figure 1, les électrodes d'entrée des électromètres 104 sur lesquelles les signaux d'excitation sont appliqués correspondent aux grilles 108 des électromètres 104.

Selon une première variante, les électrodes d'entrée des électromètres 104 sur lesquelles les signaux d'excitation sont appliqués peuvent correspondre aux drains 112 des électromètres 104.

Selon une deuxième variante, les électrodes d'entrée des électromètres 104 sur lesquelles les signaux d'excitation sont appliqués peuvent correspondre aux grilles 108 et aux drains 112 des électromètres 104.

Selon une troisième variante, lorsque les électrodes de sortie des électromètres 104 correspondent aux drains 112, les électrodes d'entrée des électromètres 104 sur lesquelles les signaux d'excitation sont appliqués peuvent correspondre aux sources 110 et/ou aux grilles 108 des électromètres 104. Dans cette troisième variante, les tensions de polarisation continues délivrées par les circuits 114 sont appliquées sur la grille 108 et la source 110 de chacun des électromètres 104 de type SET.

Lorsque les électromètres 104 correspondent à des QPC, les signaux d'excitation sont appliqués par les circuits 106 sur l'électrode d'entrée de chacun des QPC, c'est-à-dire la même électrode que celle sur laquelle la tension de polarisation délivrée par le circuit 114 est appliquée.

Plus généralement, quel que soit le type d'électromètres 104 que comporte le dispositif 100, le dispositif 100 comporte des circuits 114 appliquant des tensions de polarisation continues sur les électromètres 104 et des circuits 116 appliquant des signaux d'excitation alternatifs sur les électromètres 104. On notera qu'une même électrode d'un électromètre peut recevoir une tension de polarisation continue et un signal d'excitation alternatif « superposés », cette superposition permettant d'assurer une bonne polarisation DC globale de l'électromètre afin que l'électromètre « réponde » au signal d'excitation dans les conditions de fonctionnement souhaitées de l'électromètre.

Dans ce dispositif 100, lors d'un changement d'orientation du spin de la charge d'un des qubits, l'électromètre 104 couplé à ce qubit capte ce changement, ce qui produit une variation de sa conductance et la génération, sur une électrode de sortie de l'électromètre 104 (correspondant à la source 110 sur l'exemple de la figure 1), d'un courant périodique de fréquence égale à celle du signal d'excitation appliqué sur son électrode d'entrée. L'amplitude de ce courant dépend de l'orientation du spin de la charge contenue dans le qubit couplé à l'électromètre 104. Par exemple, cette amplitude peut être de l'ordre d'un ou de quelques pA si le spin est orienté vers le bas, et de l'ordre d'un ou de quelques nA si le spin est orienté vers le haut.

En variante, il est possible que le dispositif 100 comporte des atténuateurs interposés entre les circuits 116 et les électromètres 104 afin d'atténuer l'amplitude des signaux d'excitation appliqués sur les électrodes d'entrée des électromètres 104. Ces atténuateurs correspondent par exemple à des ponts diviseurs capacitifs.

Le dispositif 100 comporte en outre au moins un amplificateur de transimpédance, ou TIA, 118 comprenant une entrée couplée électriquement à une électrode de sortie d'au moins deux des électromètres 104 sur laquelle un signal de sortie est destiné à être délivré. Sur l'exemple de la figure 1, le signal de sortie du TIA 118 dans lequel les signaux de sortie délivrés par les électromètres 104 sont multiplexés est appelé $V_{out}$.

Dans l'exemple de réalisation représenté sur la figure 1, le dispositif 100 comporte un seul TIA 118 dont l'entrée est couplée électriquement aux électrodes de sortie (les sources 110 sur la figure 1) de tous les électromètres 104. En variante, le dispositif 100 peut comporter plusieurs TIAs 118, chacun comprenant une entrée couplée électriquement à des sorties de groupes d'électromètres 104 différents.

Lorsque les électromètres 104 correspondent à des QPC, les électrodes de sortie des électromètres 104 couplées à l'entrée du TIA 118 correspondent aux deuxièmes électrodes sur lesquelles la tension de polarisation continue n'est pas appliquée.

Le dispositif 100 comporte en outre un circuit de démultiplexage 120 comportant une entrée couplée à une sortie du TIA 118, et configuré pour démultiplexer les signaux des sortie destinés à être délivrés par les électromètres 104 et combinés en entrée du TIA 118. Le circuit de démultiplexage 120 comporte plusieurs sorties sur lesquelles les signaux combinés dans le signal de sortie du TIA 118 sont séparés les uns des autres et délivrés.

En variante, il est possible que le dispositif 100 comporte un deuxième circuit de démultiplexage, non visible sur la figure 1, destiné à être utilisé lors d'une étape de caractérisation des électromètres 104, afin de déterminer précisément les valeurs des tensions de polarisation à appliquer sur les électromètres 104. Ce deuxième circuit de démultiplexage peut être similaire ou non au circuit de démultiplexage 120, et peut être conçu tel qu'il consomme plus d'énergie que le circuit de démultiplexage 120 car il n'est utilisé que lors de cette phase de caractérisation des électromètres 104 et non lors de chaque lecture des qubits.

Le dispositif 100 comporte également un circuit de numérisation 122 comprenant des entrées couplées aux sorties du circuit de démultiplexage 120, et configuré pour numériser les signaux des sortie destinés à être délivrés par le circuit de démultiplexage 120. Dans l'exemple de réalisation représenté sur la figure 1, le circuit de numérisation 122 comporte un nombre de sorties égal au nombre d'électromètres 104, c'est-à-dire ici quatre sorties. Sur l'exemple de la figure 1, les signaux de sortie du circuit de numérisation 122 sont appelés $q_1$, $q_2$, $q_3$ et $q_4$.

Bien que non visible sur la figure 1, le dispositif 100 comporte en outre un cryostat incluant une chambre configurée pour être maintenue à une température inférieure ou égale à 4K et dans laquelle sont disposés au moins les qubits de spin, les électromètres 104, les circuits 114 de polarisation des électromètres 104, les circuits 116 d'application des signaux d'excitation, le TIA 118, le circuit de démultiplexage 120 et le circuit de numérisation 122.

De manière avantageuse, la chambre du cryostat comporte une première partie configurée pour être maintenue à une température inférieure à 1K, par exemple comprise entre 10 mK et 100 mK, et une deuxième partie configurée pour être maintenue à une température comprise entre 1K et 4K. Dans ce cas, les qubits de spin, les électromètres 104 et le TIA 118 sont par exemple disposés dans la première partie de la chambre du cryostat, et les circuits 114 de polarisation des électromètres 104, les circuits 116 d'application des signaux d'excitation, le circuit de démultiplexage 120 et le circuit de numérisation 122 sont par exemple disposés dans la deuxième partie de la chambre du cryostat. En variante, il est possible que le TIA 118 soit disposé dans la deuxième partie de la chambre de cryostat. Selon une autre variante, il est possible qu'en plus des qubits de spin, des électromètres 104 et du TIA 118, les circuits 114 de polarisation des électromètres 104 et/ou les circuits 116 d'application des signaux d'excitation et/ou le circuit de démultiplexage 120 et/ou le circuit de numérisation 122 soient disposés dans la première partie de la chambre du cryostat.

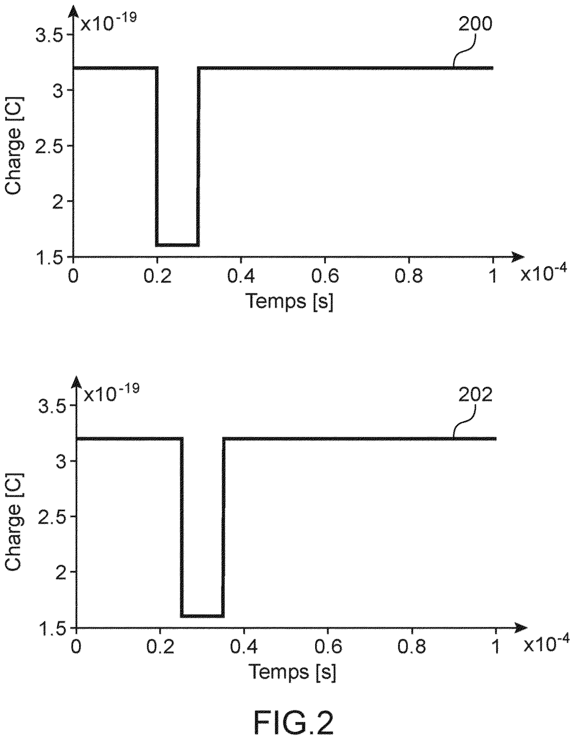

Le fonctionnement du dispositif 100 précédemment décrit est expliqué ci-dessous en lien avec les figures 2 à 5.

Dans chaque qubit, lorsque le spin de l'électron ou du trou présent dans la boîte quantique 102 du qubit change d'orientation, la charge dans cette boîte quantique 102 change. Cette modification de la charge dans la boîte quantique 102 du qubit est captée par l'électromètre 104 qui est couplé au qubit. La figure 2 représente les signaux électriques correspondant à la modification de la charge dans les boîtes quantiques 102 du premier qubit (signal désigné par la référence 200) et du quatrième qubit (signal désigné par la référence 202), le premier qubit correspondant à celui couplé à l'électromètre 104 sur lequel le signal d'excitation $w_{G,1}$ est appliqué et le quatrième qubit correspondant à celui couplé à l'électromètre 104 sur lequel le signal d'excitation $w_{G,4}$ est appliqué. Dans l'exemple de fonctionnement décrit ici, aucune modification de charge ne se produit dans les deuxième et troisième qubits (ceux couplés aux électromètres 104 sur lesquels les signaux d'excitation $w_{G,2}$ et $w_{G,3}$ sont appliqués).

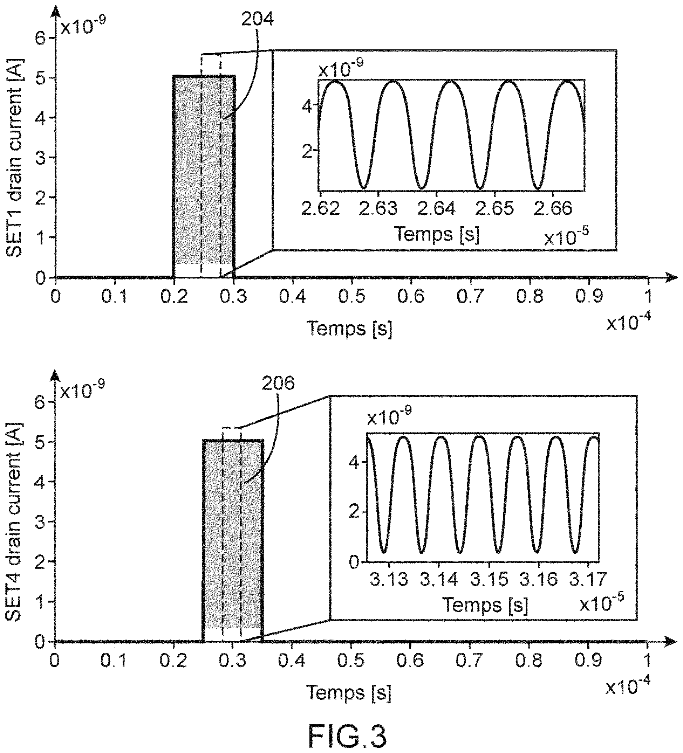

Le courant sortant des sources des SETs 104 captant une telle modification de la charge dans les boîtes quantiques 102 augmente de manière importante. Chacun de ces courants comporte des oscillations de fréquence égale à celle du courant d'excitation appliqué en entrée du SET 104 correspondant. Dans l'exemple décrit ici, la fréquence du signal d'excitation appliqué sur l'électromètre 104 couplé au premier qubit correspond à $f_1$ = 10 MHz, celle du signal d'excitation appliqué sur l'électromètre 104 couplé au deuxième qubit correspond à $f_2$ = 11 MHz, celle du signal d'excitation appliqué sur l'électromètre couplé au troisième qubit correspond à $f_3$ = 12 MHz, et celle du signal d'excitation appliqué sur l'électromètre 104 couplé au quatrième qubit correspond à $f_4$ = 13 MHz. La figure 3 représente les courants délivrés sur les sources 110 des SET couplés au premier qubit (signal désigné par la référence 204) et au quatrième qubit (signal désigné par la référence 206).

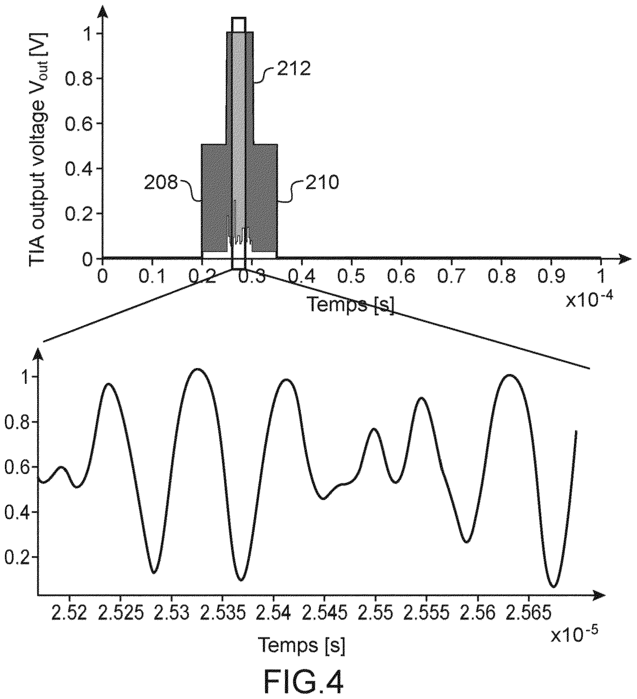

Le TIA 118 amplifie la somme des courants appliqués sur son entrée et qui correspond à la somme des courants délivrés sur les sources 110 des SET 104 couplés aux qubits. La figure 4 représente la tension de sortie délivrée par le TIA 118. Dans l'exemple représenté sur la figure 4, cette tension de sortie a une valeur nulle lorsqu'aucun des électromètres 104 ne détecte de modification de charge dans les boîtes quantiques 102 des qubits. Lorsque l'un des électromètres 104 détecte une modification de charge dans la boîte quantique 102 de l'un des qubits, la tension de sortie du TIA 118 correspond à un signal de fréquence égale à celle du signal d'excitation appliqué sur cet électromètre 104. Les références 208 et 210 désignent des parties de la tension de sortie du TIA 118 correspondant à un tel cas de figure. Enfin, lorsque plusieurs électromètres 104 détectent simultanément une modification de charge dans les boîtes quantiques 102 de plusieurs qubits, la tension de sortie du TIA 118 combine les fréquences des signaux d'excitation appliqués sur ces électromètres 104 et comporte une amplitude proportionnelle au nombre d'électromètres 104 détectant des modifications de charge dans les boîtes quantiques 102 et délivrant des signaux d'amplitude non nulle. La référence 212 désigne une partie de la tension de sortie du TIA 118 correspondant à un tel cas de figure.

Le circuit de démultiplexage 120 réalise ensuite un démultiplexage des signaux combinés au sein du signal de sortie du TIA 118, ce qui permet de séparer ces signaux les uns des autres. Les signaux démultiplexés sont ensuite numérisés par le circuit de numérisation 122. Chacun des signaux délivrés sur les sorties du circuit de numérisation 122 a une première valeur, par exemple égale à 0 V et correspondant par exemple au niveau logique '0', lorsque l'électromètre 104 correspondant ne détecte pas de modification de charge dans la boîte quantique 102 à laquelle l'électromètre 104 est couplé, et a une deuxième valeur, par exemple égale à la tension d'alimentation du circuit de numérisation 122 et correspondant par exemple au niveau logique '1', lorsque l'électromètre 104 correspondant détecte une modification charge dans la boîte quantique 102 à laquelle l'électromètre 104 est couplé.

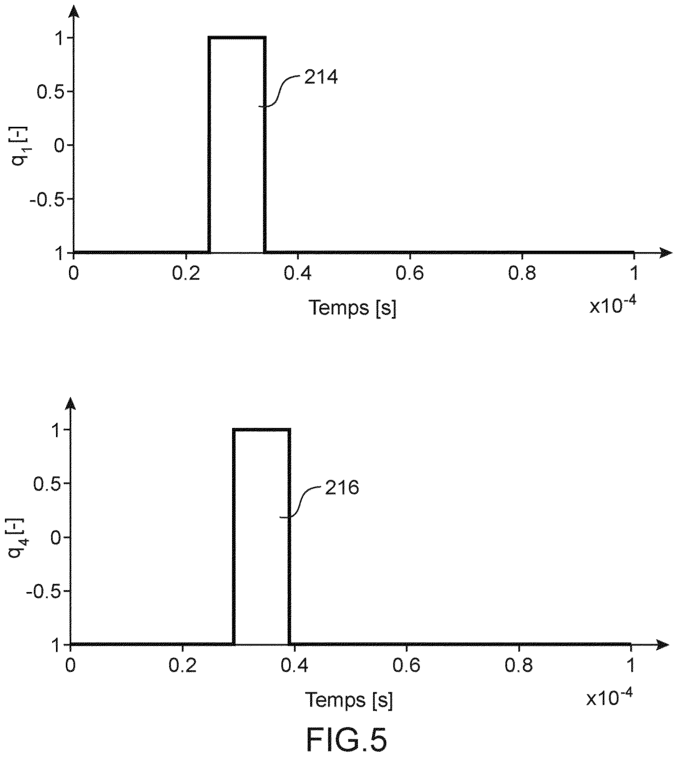

La figure 5 représente les signaux obtenus sur deux des sorties du circuit de numérisation 122. La référence 214 désigne le signal numérique obtenu qui est représentatif de la détection de modification de charge réalisée par l'électromètre 104 associé au premier qubit, et la référence 216 désigne le signal numérique obtenu qui est représentatif de la détection de modification de charge réalisée par l'électromètre 104 associé au quatrième qubit. Chacun de ces deux signaux prend la valeur logique '1' lorsque l'électromètre 104 correspondant a détecté une modification de charge dans la boîte quantique 102 à laquelle l'électromètre 104 est couplé. Bien que non représentés, les signaux obtenus sur les deux autres sorties du circuit de numérisation 122 ont une valeur nulle du fait qu'aucune modification de charge n'est détectée par les électromètres 104 correspondants.

Des exemples de réalisation des différents éléments du dispositif quantique 100 sont décrits ci-dessous.

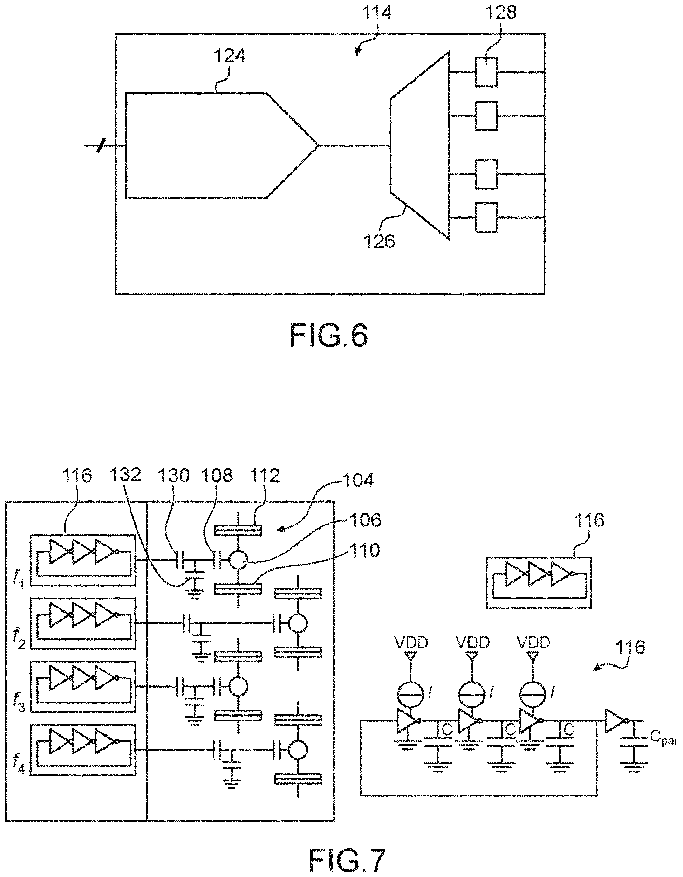

Un exemple de réalisation d'un des circuits 114 de polarisation des électromètres 104 est représenté sur la figure 6. Dans cet exemple, le circuit 114 comporte un convertisseur numérique - analogique 124 recevant en entrée, par exemple depuis un bus numérique, un ou plusieurs signaux numériques et convertissant ce ou ces signaux numériques en tensions analogiques. Une sortie du convertisseur numérique analogique 124 est couplée à une entrée d'un démultiplexeur 126. Chacune des sortie du démultiplexeur 126 est couplée à une entrée d'un échantillonneur - bloqueur 128 (également appelé « Sample and Hold » en anglais). La sortie de chaque échantillonneur - bloqueur 128 est couplée à au moins une électrode d'un des électromètres 104, par exemple au drain ou à la source d'un des SET lorsque les électromètres 104 correspondent à de tels SETs. L'échantillonnage et le blocage réalisés par chacun des échantillonneurs - bloqueurs 128 permet de maintenir, pendant une certaine durée, la tension de polarisation appliquée sur les électromètres 104 à une valeur constante ou quasi-constante. Le blocage réalisé par les échantillonneurs - bloqueurs 128 peut être de type actif ou passif.

Avec de tels circuits 114 de polarisation des électromètres 104, quelques convertisseurs numérique - analogique 124 permettent de stocker séquentiellement l'ensemble des tensions nécessaires à la polarisation d'un grand nombre d'électromètres 104 via le grand nombre d'échantillonneurs - bloqueurs 128.

Des détails de réalisation d'un tel circuit 114 de polarisation des électromètres 104 sont par exemple donnés dans le document M. E. P. V. Zurita et al., "Cryogenic Current Steering DAC With Mitigated Variability," in IEEE Solid-State Circuits Letters, vol. 3, pp. 254-257, 2020.

Un exemple de réalisation des circuits 116 appliquant les signaux d'excitation sur les électrodes d'entrée des électromètres 104 est représenté sur la figure 7. Dans cet exemple, chaque circuit 116 correspond à un oscillateur en anneau comprenant des inverseurs et des capacités. La fréquence d'oscillation d'un tel oscillateur 116, et donc la fréquence du signal d'excitation généré par l'oscillateur 116, est ajusté par les valeurs et le nombre de capacités de l'oscillateur 116, ainsi que le nombre d'inverseurs et les valeurs des courants de polarisation appliqués sur ces inverseurs. Sur la figure 7, quatre circuits 116 sont représentés, chaque circuit 116 générant un signal d'excitation de fréquence différente.

Par exemple, avec un tel oscillateur 116 oscillant à une fréquence égale à 10 MHz, sa consommation électrique est égale à environ 5,3 μW, ce qui est négligeable en comparaison de la capacité de réfrigération d'un cryostat à 4K qui est d'environ 1 W.

Sur l'exemple de la figure 7, deux capacités 130, 132 sont interposées entre la sortie de chaque circuit 116 et la grille 108 de chaque électromètre 104. Ces capacités 130, 132 forment des diviseurs de tension permettant de réduire l'amplitude de la tension d'excitation générée par chaque circuit 116, ce qui permet d'éviter un risque de dépolarisation des électromètres 104. Les valeurs de ces capacités 130, 132 peuvent être ajustables. Sur la figure 7, les capacités parasites des grilles 108 des électromètres 104 sont représentées.

En variante, le circuit 116 peut correspondre à un autre type d'oscillateur, par exemple un oscillateur à relaxation, un oscillateur harmonique ou un oscillateur à quartz. L'avantage des oscillateurs en anneau et des oscillateurs à relaxation est leur faible consommation électrique et leur faible empreinte. Les oscillateurs harmoniques et à quartz permettent par contre d'atteindre de meilleures performances en terme de bruit, mais occupent une surface plus importante.

Dans le dispositif 100, le TIA 118 permet d'amplifier des courants de l'ordre d'un ou de quelques nA délivrés par les électromètres 104. Le gain du TIA 118 peut donc être relativement important, de l'ordre d'une dizaine de MΩ. De plus, sa bande passante peut aussi être relativement importante afin de pouvoir adresser un nombre important d'électromètres 104 (chaque électromètre 104 étant par exemple excité à une fréquence différente, un espacement de ces fréquences permet d'éviter de fausses détections). Ainsi, un amplificateur à transimpédance 118 ayant de très bonnes performances permet une utilisation avec un grand nombre d'électromètres 104 avec une fidélité suffisante au bon fonctionnement d'un ordinateur quantique. A titre d'exemple, le TIA 118 peut avoir une bande passante comprise entre 10 MHz et 30 MHz, un gain de 10 MΩ, un bruit en entrée de l'ordre de 10 fA/V(Hz), et une consommation égale à environ 100 μW.

Des détails de réalisation d'un exemple de TIA 118 sont décrits dans le document de L. Le Guevel et al., « 19.2 A 110mK 295μW 28nm FDSOI CMOS Quantum Integrated Circuit with a 2.8 GHz Excitation and nA Current Sensing of an On-Chip Double Quantum Dot », ISSCC, 2020.

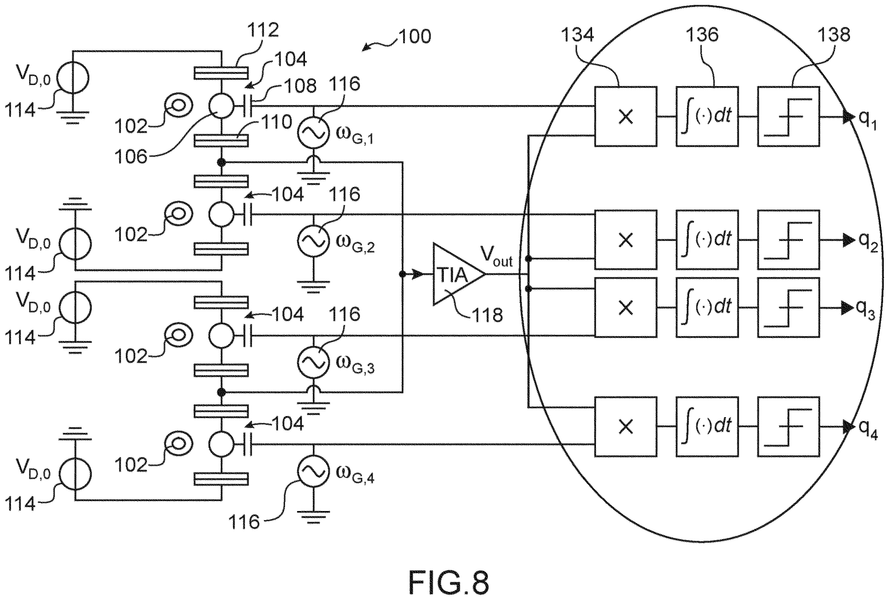

Un exemple de réalisation du circuit de démultiplexage 120 et du circuit de numérisation 122 est représenté sur la figure 8. Afin de faciliter la compréhension de cet exemple de réalisation, les autres éléments du dispositif 100 selon le premier mode de réalisation sont également représentés.

Le circuit de démultiplexage 120 comporte des mélangeurs 134 comprenant chacun une première entrée couplée à la sortie du TIA 118, et une deuxième entrée couplée à l'un des circuits 116. Le nombre de mélangeurs 134 du circuit de démultiplexage 120 est égal au nombre d'électromètres 104 couplés au TIA 118, afin que le circuit de démultiplexage 120 puisse démultiplexer tous les signaux qui ont été multiplexés en entrée du TIA 118.

Lorsque les deux signaux appliqués en entrée d'un des mélangeurs 134 sont à la même fréquence, un signal comportant une composante continue est délivré en sortie du mélangeur 134. Cela signifie que l'électromètre 104 ayant été excité par le signal reçu en entrée du mélangeur 134 a détecté une modification de charge dans la boîte quantique 102 à laquelle il est couplé. Lorsque les deux signaux appliqués en entrée d'un des mélangeurs 134 ne sont pas à la même fréquence, le signal délivré en sortie du mélangeur 134 ne comporte pas de composante continue, ce qui signifie que l'électromètre 104 ayant été excité par le signal reçu en entrée du mélangeur 134 n'a pas détecté de modification de charge dans la boîte quantique 102 à laquelle il est couplé.

Le circuit de numérisation 122 comporte des intégrateurs 136, ou plus généralement un ensemble de cellules de filtrage, comprenant chacun une entrée couplée à la sortie d'un des mélangeurs 134, ainsi que des comparateurs 138, ou plus généralement des convertisseurs analogique-numérique, comprenant chacun une entrée couplée à la sortie d'un des intégrateurs 136. Ainsi, les tensions de sortie des mélangeurs 134 sont intégrées pendant une certaine durée par les intégrateurs 136, puis comparées à une valeur seuil par les comparateurs 138. Si la tension de sortie d'un des mélangeurs 134 contient une composante continue, alors la tension de sortie de l'intégrateur 136 couplé à ce mélangeur 134 va augmenter linéairement avec le temps, passant au-dessus d'une tension seuil appliquée sur le comparateur 138 couplé à cet intégrateur 136 si le temps d'intégration est suffisamment important. Il est ainsi possible de retrouver quelle(s) fréquence(s) est/sont contenue(s) dans la tension de sortie du TIA 118, et donc de retrouver l'état de chaque qubit du dispositif 100. Les signaux délivrés en sortie des comparateurs 138 correspondent à des signaux numériques auxquels la valeur logique '1' est par exemple associée à un état de spin haut et la valeur logique '0' est par exemple associée à un état de spin bas. Les sorties des comparateurs 138 peuvent être envoyées en dehors du cryostat, dans une partie du dispositif quantique 100 se trouvant par exemple à température ambiante.

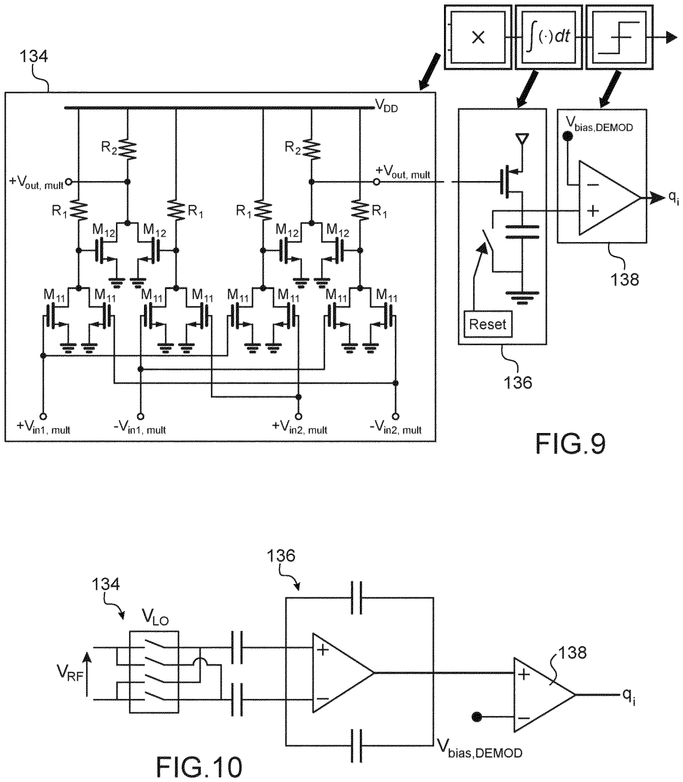

Un premier exemple de réalisation d'un mélangeur 134, d'un intégrateur 136 et d'un comparateur 138 est représenté sur la figure 9. Dans ce premier exemple de réalisation, le mélangeur 134 est configuré pour multiplier la tension de sortie du TIA 118 avec une tension issue d'un des circuits 116 formant un oscillateur. Le résultat de cette multiplication est intégré pendant une certaine durée dans une capacité de l'intégrateur 136, puis comparé grâce à un amplificateur opérationnel monté en comparateur et formant le comparateur 138. Le résultat de cette comparaison, correspondant à un niveau logique 0 ou 1, permet de connaître l'état du qubit associé à ces éléments 134, 136 et 138. Des explications complémentaires concernant la réalisation du mélangeur 134 sont données dans le document de L.S. Lai et al., « An experimental Ultra-Low-Voltage Demodulator in 0.18-μm CMOS », IEEE Transactions on Microwaves and Techniques, vol. 57, n°10, octobre 2009.

Un deuxième exemple de réalisation d'un mélangeur 134, d'un intégrateur 136 et d'un comparateur 138 est représenté sur la figure 10. Dans ce deuxième exemple de réalisation, le mélangeur 134 comporte un circuit de type hacheur, ou « chopper » en anglais. L'intégrateur 136 est ici de type actif et comporte un amplificateur opérationnel monté en intégrateur. Le comparateur 138 est similaire à celui du premier exemple de réalisation précédemment décrit en lien avec la figure 9.

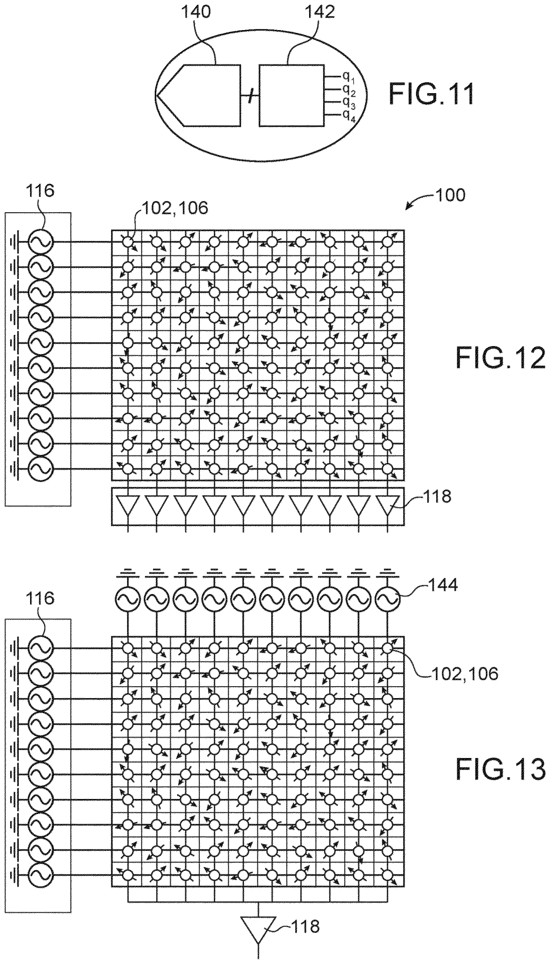

Dans le premier mode de réalisation précédemment décrit, le signal de sortie du TIA 118 est envoyé en entrée d'un circuit de démultiplexage 120 de type analogique, puis en entrée d'un circuit de numérisation 122. En variante, il est possible que le signal de sortie du TIA 118 soit envoyé en entrée d'un convertisseur analogique - numérique 140, le signal converti étant ensuite envoyé en entrée d'un circuit de démultiplexage 142 de type numérique, comme représenté sur la figure 11. Le convertisseur analogique numérique 140 est par exemple de type à approximation successive (ou « ADC SAR »), ou de type flash. Des détails de réalisation d'un tel convertisseur sont par exemple décrits dans le document H. Zhao et al., « A low-power cryogenic analog to digital converter in standard CMOS technology », Cryogénies 55-56, 2013, pp. 79-83. Le circuit de démultiplexage 142 peut par exemple mettre en oeuvre une transformée de Fourrier du signal de sortie du convertisseur 140. Des détails de réalisation sont par exemple donnés dans le document de J. Masciotti et al., « Digital Lock-In Détection for Discriminating Multiple Modulation Frequencies With High Accuracy and Computational Efficiency », IEEE Transactions on Instrumentation and measurement, vol. 57, n°1, janvier 2008.

Un exemple de réalisation d'un dispositif quantique 100 selon un deuxième mode de réalisation est décrit ci-dessous en lien avec la figure 12.

Dans ce deuxième mode de réalisation, les qubits du dispositif quantique 100 sont agencés sous la forme d'une matrice de M lignes et N colonnes, avec M et N nombres entiers supérieurs ou égaux à 1 et au moins l'un des nombres M et N est strictement supérieur à 1. Les électromètres 104 sont également agencés en formant une matrice de M lignes et N colonnes. Cette matrice d'électromètres 104 est disposée au-dessus ou en dessous de la matrice de qubits telle que la boîte quantique 102 de chacun des qubits soit couplée de manière électrostatique à une boîte quantique 106 d'un des électromètres 104 se trouvant à proximité, au-dessus ou en dessous, de la boîte quantique 102 de chacun des qubits.

La matrice de qubits et la matrice d'électromètres 104 peuvent être réalisées de manière superposée via la mise en oeuvre d'un procédé d'intégration 3D.

Le dispositif 100 comporte ici M circuits 116 d'application d'au moins un signal d'excitation sur au moins une électrode d'entrée de chacun des électromètres 104. Tous les électromètres 104 disposés sur une même ligne de la matrice sont couplés à un même circuit 116 de manière à ce qu'un même signal d'excitation soit appliqué sur au moins une électrode d'entrée de ces électromètres 104.

Le dispositif 100 comporte en outre N TIA 118. Tous les électromètres 104 disposés sur une même colonne de la matrice sont couplés à un même TIA 118 de manière à ce que tous les signaux de sortie délivrés par ces électromètres 104 s'additionnent et se retrouvent multiplexés en entrée d'un même TIA 118.

Sur la figure 12, les circuits 114 de polarisation des électromètres 104 ne sont pas représentés.

Dans ce deuxième mode de réalisation, et plus généralement lorsque le dispositif 100 comporte plusieurs TIA 118, les signaux de sortie des TIA 118 peuvent être lus simultanément ou non.

En variante de ce deuxième mode de réalisation, il est possible que le dispositif 100 comporte un nombre de TIA 118 inférieur à N. Dans cette variante, l'entrée d'au moins un TIA 118 reçoit les signaux de plus de M électromètres 104. Dans ce cas, par triangularisation des résultats de lecture, il est possible de retrouver l'état de chaque qubit à partir des informations délivrées par les TIA 118.

Par exemple, il est envisageable que le dispositif 100 selon ce deuxième mode de réalisation ne comporte qu'un seul TIA 118. Tous les signaux délivrés par les électromètres 104 sont dans ce cas multiplexés en entrée de cet amplificateur. Le multiplexage réalisé est alors plus complexe. Par exemple, en considérant un agencement des qubits en matrice et en utilisant des signaux d'excitation de fréquences différentes, il est envisageable de ne faire appel qu'à un seul TIA 118 en appliquant sur la grille et le drain de chaque électromètre 104 deux signaux d'excitation différents : des premiers signaux d'excitation de fréquences différentes pour chaque ligne de qubits, et des deuxièmes signaux d'excitation de fréquences différentes pour chaque colonne de qubits. Ainsi, en utilisant des couples de fréquences d'excitation distinctes pour chaque qubit, il est possible de les différencier lors du démultiplexage. Une telle variante est représentée sur la figure 13, dans laquelle des premiers circuits 116 appliquent les premiers signaux d'excitation et des deuxièmes circuits 144 appliquent les deuxièmes signaux d'excitation.

Les exemples de réalisation des éléments du dispositif 100 précédemment décrit en lien avec les figures 6 à 11 peuvent s'appliquer pour la réalisation des éléments du dispositif 100 selon le deuxième mode de réalisation.

Quel soit le mode ou la variante de réalisation du dispositif 100, le nombre maximum de qubits que peut comporter le dispositif 100 peut être déterminé par les capacités de refroidissement du cryostat, et donc de la puissance électrique consommée par les différents éléments se trouvant dans le cryostat. Par exemple, en considérant qu'un oscillateur (c'est-à-dire un des circuits 116) consomme 5 $\mu$W, qu'un TIA 118 consomme 200 $\mu$W et qu'un circuit de démultiplexage 120 analogique consomme 100 $\mu$W, que les TIA 118 sont placés, avec les qubits et les électromètres 104, dans la première partie de la chambre du cryostat refroidie à une température de 300 mK et dont la capacité de refroidissement correspond à une puissance maximale de 10 mW, et que les autres éléments électroniques sont placés dans la deuxième partie de la chambre du cryostat refroidie à une température de 4 K et dont la capacité de refroidissement correspond à une puissance maximale de 1 W, le nombre de lignes M et le nombre de colonnes N de la matrice de qubits sont choisis en respectant les relations suivantes :

$$N*M*100.10^{-6} + M*5.10^{-6} < 1$$

$$N*200.10^{-6} < 0.01$$

La fréquence d'excitation minimale utilisée pour exciter les électromètres 104 fixe le temps de lecture maximal pris par le dispositif 100 (nécessité d'intégrer plusieurs périodes afin d'atteindre une fiabilité de lecture raisonnable). La fréquence d'excitation maximale $f_M$ est fixée par la bande passante du TIA 118. L'écartement entre chaque fréquence, $\Delta f$, est aussi choisi de manière à être suffisamment important pour ne pas provoquer de fausses détections et dégrader la fidélité du système. A titre d'exemple, le TIA 118 peut avoir un rapport signal du bruit, ou SNR, égal à 4, avoir une fréquence $f_1$ égale à 10 MHz (pour espérer avoir un temps de lecture inférieur à la microseconde), une fréquence fM égale à 30MHz, et un $\Delta f$ de 100kHz, et conserver une fidélité raisonnable (>99%). Avec ces performances, il est ainsi possible d'adresser une matrice de qubits ayant (fM - f1) / $\Delta f$ lignes, soit 200 lignes (M=200).

En considérant les relations indiquées précédemment relatives à la capacité maximale du cryostat, le nombre de colonnes maximal est égal à 50. Ainsi, dans les conditions indiquées ci-dessus, le dispositif quantique 100 peut comporter un nombre de qubits maximal égal à 10000.

Dans les modes de réalisation précédemment décrits, le paramètre variable des signaux d'excitation utilisé correspond à la fréquence des signaux. En variante, ce paramètre peut correspondre à la phase ou l'amplitude des signaux d'excitation, voire une combinaison de plusieurs de ces paramètres (fréquence et/ou phase et/ou amplitude). Dans cette variante, les différents éléments du dispositif 100 peuvent être similaires à ceux précédemment décrits, excepté le circuit de démultiplexage qui est configuré pour réaliser une démodulation adaptée au paramètre variable des signaux d'excitation.

Par exemple, lorsque le paramètre discriminant des signaux d'excitation correspond à l'amplitude de ces signaux (pour un signal d'excitation de type a.sin($\omega$.t), le paramètre discriminant correspond au paramètre « a »), ces amplitudes sont choisies de manière à ce que la valeur de l'amplitude de chacun de ces signaux soit unique, différentes les unes des autres et également vis-à-vis des différentes combinaisons, ou sommes, possibles de ces amplitudes. Par exemple, les valeurs des amplitudes des courants résultant des signaux d'excitation et entrant dans le TIA 118 peuvent correspondre à des valeurs multiples successives telles que: 0,1 nA, 0,2 nA, 0,4 nA, 0,8 nA, 1,6 nA, etc. Dans ce cas, une mesure précise de l'amplitude de la tension de sortie du TIA 118 permet de déterminer quelle(s) amplitude(s) est/sont contenue(s) dans cette tension de sortie, et donc de retrouver l'état de chaque qubit du dispositif 100. Cette mesure peut être réalisée par un unique TIA 118 sommant tous les courants délivrés par les électromètres 104, puis par un circuit de démultiplexage 120 pouvant par exemple correspondre à un convertisseur analogique - numérique permettant de définir, selon la valeur de la tension de sortie du TIA 118, quel(s) sont le ou les électromètres 104 délivrant un courant de sortie.

Selon un autre exemple, lorsque le paramètre discriminant des signaux d'excitation correspond à la phase de ces signaux, il est possible d'utiliser, pour le démultiplexage du signal de sortie du TIA 118, un circuit de démultiplexage réalisant une conversion analogique numérique puis une analyse du signal en numérique obtenu. En variante, ce démultiplexage peut être réalisé via une analyse de l'amplitude et de la phase du signal de sortie du TIA 118 par des blocs analogiques. L'utilisation de la phase comme paramètre discriminant peut être mise en oeuvre en utilisant deux ou trois signaux d'excitation de phases différentes, ou avantageusement combinée avec un autre paramètre discriminant. Dans ce cas, comme sur l'exemple de la figure 1, les circuits 114 de polarisation des électromètres peuvent être distincts des circuits 116 d'application des signaux d'excitation, et les circuits de démultiplexage 120 et de numérisation 122 peuvent être similaires aux exemples de réalisation précédemment décrits réalisant une discrimination des signaux en utilisant les fréquences différences des signaux d'excitation.

## Revendications

**1.** Dispositif quantique (100) comportant au moins :

- plusieurs qubits de spin comprenant chacun au moins une boite quantique (102) ;
- plusieurs électromètres (104) chacun couplé de manière électrostatique à un puits de potentiel de la boîte quantique (102) d'un des qubits de spin ;
- des circuits (116) d'application d'au moins un signal d'excitation alternatif sur au moins une électrode d'entrée (108, 112, 146) de chacun des électromètres (104), configurés tels qu'une valeur d'au moins un paramètre parmi la fréquence, la phase et l'amplitude maximale de chacun des signaux d'excitation soit différente de celle des autres signaux d'excitation ;
- un amplificateur de transimpédance (118) comprenant une entrée couplée électriquement à des électrodes de sortie (110, 148), distinctes des électrodes d'entrée (108, 112, 146), d'au moins deux des électromètres (104) sur lesquelles des signaux de sortie sont destinés à être délivrés ;
- un circuit de démultiplexage (120, 142) comportant une entrée couplée électriquement à une sortie de l'amplificateur de transimpédance (118), et configuré pour démultiplexer les signaux de sortie destinés à être délivrés par les électromètres (104).

2. Dispositif quantique (100) selon la revendication 1, comportant en outre un cryostat incluant une chambre configurée pour être maintenue à une température inférieure ou égale à 4K et dans laquelle sont disposés au moins les qubits de spin, les électromètres (104) et l'amplificateur de transimpédance (118).

3. Dispositif quantique (100) selon l'une des revendications précédentes, comportant en outre des circuits (114) de polarisation des électromètres (104) configurés pour appliquer des tensions de polarisation continues sur les électromètres (104).

4. Dispositif quantique (100) selon la revendication 3, dans lequel les circuits (114) de polarisation des électromètres (104) comportent au moins :

   - un convertisseur numérique - analogique (124), configuré pour recevoir en entrée au moins un signal numérique codant des valeurs de tensions de polarisation des électromètres (104) ;
   - un démultiplexeur (126) comprenant une entrée couplée électriquement à une sortie du convertisseur numérique - analogique (124), et plusieurs sorties sur lesquelles les tensions de polarisation des électromètres (104) sont destinées à être délivrées ;
   - des échantillonneurs - bloqueurs (128) comprenant chacun une entrée couplée électriquement à une sortie du démultiplexeur (126).

5. Dispositif quantique (100) selon l'une des revendications précédentes, dans lequel les électromètres (104) correspondent à des transistors à un électron et/ou à des contacts ponctuels quantiques.

6. Dispositif quantique (100) selon la revendication 5, dans lequel :

   - lorsque les électromètres (104) correspondent à des transistors à un électron, les circuits (116) d'application des signaux d'excitation sont couplés à la grille (108) ou à la source (110) ou au drain (112) de chacun des transistors à un électron, ou sont couplés à la grille (108) et à la source (110) de chacun des transistors à un électron, ou sont couplés à la grille (108) et au drain (112) de chacun des transistors à un électron ;
   - lorsque les électromètres (104) correspondent à des contacts ponctuels quantiques, les circuits (116) d'application des signaux d'excitation sont couplés à une première (146) de deux électrodes de chacun des contacts ponctuels quantiques.

7. Dispositif quantique (100) selon l'une des revendications 3 et 4 et selon l'une des revendications 5 et 6, dans lequel les circuits (114) de polarisation des électromètres (104) sont configurés pour :

   - lorsque les électromètres (104) correspondent à des transistors à un électron, appliquer des tensions de polarisation continues sur une grille (108) et un drain (112) de chacun des transistors à un électron lorsque les circuits (116) d'application des signaux d'excitation sont couplés à la grille (108) et/ou au drain (112) de chacun des transistors à un électron, ou sur une grille (108) et une source (110) de chacun des transistors à un électron lorsque les circuit (116) d'application des signaux d'excitation sont couplés à la grille (108) et/ou à la source (110) de chacun des transistors à un électron ;
   - lorsque les électromètres (104) correspondent à des contacts ponctuels quantiques, appliquer des tensions de polarisation continues sur la première (146) des deux électrodes de chacun des contacts ponctuels quantiques.

8. Dispositif quantique (100) selon l'une des revendications précédentes, dans lequel

   - les qubits sont agencés en formant une matrice de qubits ; et
   - chacun des circuits (116) d'application d'au moins un signal d'excitation est configuré pour appliquer un même signal d'excitation sur les électrodes d'entrée (108, 112) d'électromètres (104) couplés à des qubits agencés sur une même ligne de la matrice de qubits.

9. Dispositif quantique (100) selon la revendication 8, dans lequel les électromètres (104) sont agencés en formant une matrice d'électromètres (104) disposée en regard de la matrice de qubits telle que la boîte quantique (102) de chacun des qubits soit couplée de manière électrostatique à une boîte quantique (106) d'un des électromètres (104).

10. Dispositif quantique (100) selon larevendication 8 ou 9, dans lequel les électrodes de sortie (110) d'électromètres (104) couplés à des qubits agencés sur une même colonne de la matrice de qubits sont couplées à l'entrée d'un même amplificateur de transimpédance (118).

11. Dispositif quantique (100) selon l'une des revendications 8 à 10, dans lequel :

   - chacun des circuits (116) d'application d'au moins un signal d'excitation forme un premier circuit d'application d'au moins un premier signal d'excitation configuré pour appliquer un même premier signal d'excitation sur des premières électrodes d'entrée d'électromètres (104) couplés à des qubits agencés sur une même ligne de la matrice de qubits ;
   - le dispositif quantique (100) comporte en outre des deuxièmes circuits (144) d'application d'au moins un deuxième signal d'excitation, chacun configuré pour appliquer un même deuxième signal d'excitation sur des deuxièmes électrodes d'entrée d'électromètres (104) couplés à des qubits agencés sur une même colonne de la matrice de qubits ;
   - lesdits premiers et deuxièmes circuits (116, 144) d'application sont configurés tels qu'une valeur d'au moins un paramètre parmi la fréquence, la phase et l'amplitude maximale de chacun des premiers et deuxièmes signaux d'excitation soit différente de celle des autres signaux d'excitation ;
   - l'entrée de l'amplificateur de transimpédance (118) est couplée électriquement à une électrode de sortie de chacun des électromètres (104).

12. Dispositif quantique (100) selon l'une des revendications précédentes, comportant en outre :

   - un circuit de numérisation (122) comprenant des entrées couplées à des sorties du circuit de démultiplexage (120) et configuré pour numériser les signaux de sortie destinés à être délivrés par le circuit de démultiplexage (120), ou

   - un convertisseur analogique - numérique (140) interposé entre l'entrée du circuit de démultiplexage (142) et la sortie de l'amplificateur de transimpédance (118).

13. Dispositif quantique (100) selon la revendication 11, dans lequel, lorsque le dispositif quantique (100) comporte le circuit de numérisation (122) :

   - le circuit de démultiplexage (120) comporte plusieurs mélangeurs (134) comprenant chacun une première entrée couplée électriquement à la sortie de l'amplificateur de transimpédance (118) et une deuxième entrée configurée pour recevoir l'un des signaux d'excitation ;
   - le circuit de numérisation (122) comporte plusieurs intégrateurs (136) comprenant chacun une entrée couplée électriquement à une sortie d'un des mélangeurs (134), et plusieurs comparateurs (138) comprenant chacun une entrée couplée électriquement à une sortie d'un des intégrateurs (136).

14. Dispositif quantique (100) selon la revendication 2 et selon l'une des revendications 12 ou 13, dans lequel les circuits (116) d'application des signaux d'excitation, le circuit de démultiplexage (120, 142) et le circuit de numérisation (122) sont disposés dans la chambre du cryostat.

15. Dispositif quantique (100) selon la revendication 14, dans lequel :

   - la chambre du cryostat comporte une première partie configurée pour être maintenue à une température inférieure à 1K et une deuxième partie configurée pour être maintenue à une température comprise entre 1K et 4K ;
   - les qubits de spin, les électromètres (104) et l'amplificateur de transimpédance (118) sont disposés dans la première partie de la chambre du cryostat ;
   - les circuits (116) d'application des signaux d'excitation, le circuit de démultiplexage (120, 142) et le circuit de numérisation (122) sont disposés dans la deuxième partie de la chambre du cryostat.

16. Dispositif quantique (100) selon l'une des revendications précédentes, dans lequel une variation de conductance de chaque électromètre représente l'état du qubit de spin correspondant.

17. Dispositif quantique (100) selon la revendication 16, dans lequel le signal d'excitation appliqué en entrée de chaque électromètre correspond à un signal modifiant le courant généré en sortie par ledit électromètre, le courant sortant de chaque électromètre correspondant au signal de sortie délivré sur l'électrode de sortie dudit électromètre.

**Patentansprüche**

1. Quantenvorrichtung (100), die mindestens enthält:

   - mehrere Spinqubits, die jeweils mindestens einen Quantum-Dot (102) umfassen;
   - mehrere Elektrometer (104), die jeweils auf elektrostatische Weise mit einem Potentialtopf des Quantum-Dot (102) eines der Spinqubit gekoppelt sind;
   - Schaltungen (116) zum Anwenden mindestens eines alternativen Erregungssignals an mindestens eine Eingangselektrode (108, 112, 146) jedes der Elektrometer (104), die so konfiguriert sind, dass ein Wert von mindestens einem Parameter aus Frequenz, Phase und maximaler Amplitude jedes der Erregungssignale von dem der anderen Erregungssignale verschieden ist;
   - einen Transimpedanzverstärker (118), der einen Eingang umfasst, der elektrisch an Ausgangselektroden (110, 148) gekoppelt ist, die sich von den Eingangselektroden (108, 112, 146) von mindestens zwei der Elektrometer (104) unterscheiden, an denen Ausgangssignale dazu bestimmt sind, geliefert zu werden;
   - eine Demultiplexschaltung (120, 142), die einen Eingang enthält, der elektrisch mit einem Ausgang des Transimpedanzverstärkers (118) gekoppelt ist, und konfiguriert ist, um die Ausgangssignale zu demultiplexen, die dazu bestimmt sind, durch die Elektrometer (104) geliefert zu werden.

2. Quantenvorrichtung (100) nach Anspruch 1, ferner einen Kryostat enthaltend, der eine Kammer einschließt, die konfiguriert ist, um bei einer Temperatur von weniger als oder gleich 4K gehalten zu werden, und in der mindestens die Spinqubits, die Elektrometer (104) und der Transimpedanzverstärker (118) angeordnet sind.

3. Quantenvorrichtung (100) nach einem der vorhergehenden Ansprüche, ferner Schaltungen (114) zur Polarisation der Elektrometer (104) enthaltend, die konfiguriert sind, um Polarisations-Gleichspannungen an die Elektrometer (104) anzuwenden.

4. Quantenvorrichtung (100) nach Anspruch 3, wobei die Schaltungen (114) zur Polarisation der Elektrometer (104) mindestens enthalten:

   - einen Digital-Analog-Wandler (124), der konfiguriert ist, um am Eingang mindestens ein digitales Signal zu empfangen, das Werte der Polarisationsspannungen der Elektrometer (104) codiert;
   - einen Demultiplexer (126), der einen Eingang umfasst, der elektrisch mit einem Ausgang des Digital-Analog-Wandlers (124) gekoppelt ist, und mehrere Ausgänge, an denen die Polarisationsspannungen der Elektrometer (104) dazu bestimmt sind, geliefert zu werden;
   - Abtast-Halte-Glieder (128), die jeweils einen Eingang umfassen, der elektrisch mit einem Ausgang des Demultiplexers (126) gekoppelt ist.

5. Quantenvorrichtung (100) nach einem der vorhergehenden Ansprüche, wobei die Elektrometer (104) Einzelelektronentransistoren und/oder Quantenpunktkontakten entsprechen.

6. Quantenvorrichtung (100) nach Anspruch 5, wobei:

   - wenn die Elektrometer (104) Einzelelektronentransistoren entsprechen, die Schaltungen (116) zum Anwenden der Erregungssignale mit dem Gate (108) oder der Source (110) oder dem Drain (112) jedes der Einzelelektronentransistoren gekoppelt sind oder mit dem Gate (108) und der Source (110) jedes der Einzelelektronentransistoren gekoppelt sind oder mit dem Gate (108) und dem Drain (112) jedes der Einzelelektronentransistoren gekoppelt sind;
   - wenn die Elektrometer (104) Quantenpunktkontakten entsprechen, die Schaltungen (116) zum Anwenden der Erregungssignale mit einer ersten (146) von zwei Elektroden von jedem der Quantenpunktkontakte gekoppelt sind.

7. Quantenvorrichtung (100) nach einem der Ansprüche 3 und 4 und nach einem der Ansprüche 5 und 6, wobei die Schaltungen (114) zur Polarisation der Elektrometer (104) konfiguriert sind zum:

   - wenn die Elektrometer (104) einem Einzelelektronentransistor entsprechen, Anwenden von Polarisations-Gleichspannungen an ein Gate (108) und einen Drain (112) jeder der Einzelelektronentransistoren, wenn die Schaltungen (116) zum Anwenden der Erregungssignale mit dem Gate (108) und/oder dem Drain (112) jeder der Einzelelektronentransistoren gekoppelt sind oder mit einem Gate (108) und einer Source (110) jeder der Einzelelektronentransistoren, wenn die Schaltungen (116) zum Anwenden der Erregungssignale mit dem Gate (108) und/oder der Source (110) jeder der Einzelelektronentransistoren gekoppelt sind;
   - wenn die Elektrometer (104) Quantenpunktkontakten entsprechen, Anwenden von Polarisations-Gleichspannungen an die erste (146) der zwei Elektroden jedes der Quantenpunktkontakte.

8. Quantenvorrichtung (100) nach einem der vorhergehenden Ansprüche, wobei:

   - die Qubits so eingerichtet sind, dass sie eine Matrix von Qubits bilden; und
   - jede der Schaltungen (116) zum Anwenden mindestens eines Erregungssignals konfiguriert ist, um ein selbiges Erregungssignals an die Eingangselektroden (108, 112) von Elektrometern (104) anzuwenden, die mit Qubits gekoppelt sind, die auf einer selbigen Leitung der Qubitmatrix eingerichtet sind.

9. Quantenvorrichtung (100) nach Anspruch 8, wobei die Elektrometer (104) eingerichtet sind, indem eine Matrix von Elektrometern (104) gebildet wird, die gegenüber der Qubitmatrix angeordnet ist, so dass der Quantum-Dot (102) jedes der Qubits auf elektrostatische Weise mit einem Quantum-Dot (106) eines der Elektrometer (104) gekoppelt ist.

10. Quantenvorrichtung (100) nach Anspruch 8 oder 9, wobei die Ausgangselektroden (110) von Elektrometern (104) die an Qubits gekoppelt sind, die auf einer selbigen Spalte der Qubitmatrix eingerichtet sind, mit dem Eingang eines selbigen Transimpedanzverstärkers (118) gekoppelt sind.

11. Quantenvorrichtung (100) nach einem der Ansprüche 8 bis 10, wobei:

   - jede der Schaltungen (116) zum Anwenden mindestens eines ersten Erregungssignals eine erste Schaltung zum Anwenden mindestens eines ersten Erregungssignals bildet, die konfiguriert ist, um ein selbiges erstes Erregungssignal an erste Eingangselektroden von Elektrometern (104) anzuwenden, die mit Qubits gekoppelt sind, die auf einer selbigen Leitung der Qubitmatrix eingerichtet sind;
   - die Quantenvorrichtung (100) ferner zweite Schaltungen (144) zum Anwenden mindestens eines zweiten Erregungssignals enthält, die jeweils konfiguriert sind, um ein selbiges zweites Erregungssignals an zweite Eingangselektroden von Elektrometern (104) anzuwenden, die mit Qubits gekoppelt sind, die auf einer selbigen Spalte der Qubitmatrix eingerichtet sind;
   - die ersten und zweiten Anwendungsschaltungen (116, 144) so konfiguriert sind, dass ein Wert von mindestens einem Parameter aus Frequenz, Phase und maximaler Amplitude jedes der ersten und zweiten Erregungssignale von dem der anderen Erregungssignale verschieden ist;

   - der Eingang des Transimpedanzverstärkers (118) elektrisch mit einer Ausgangselektrode jeder der Elektrometer (104) gekoppelt ist.

12. Quantenvorrichtung (100) nach einem der vorhergehenden Ansprüche, ferner enthaltend:

   - eine Digitalisierungsschaltung (122), die Eingänge umfasst, die mit Ausgängen der Demultiplexschaltung (120) gekoppelt sind, und konfiguriert ist, um die Ausgangssignale, die dazu bestimmt sind, von der Demultiplexschaltung (120) geliefert zu werden, zu digitalisieren oder
   - einen Analog-Digital-Wandler (140), der zwischen dem Eingang der Demultiplexschaltung (142) und dem Ausgang des Transimpedanzverstärkers (118) eingesetzt ist.

13. Quantenvorrichtung (100) nach Anspruch 11, wobei, wenn die Quantenvorrichtung (100) die Digitalisierungsschaltung (122) enthält:

   - die Demultiplexschaltung (120) mehrere Mischer (134) enthält, die jeweils einen ersten Eingang umfassen, der elektrisch mit dem Ausgang des Transimpedanzverstärkers (118) gekoppelt ist, und einen zweiten Eingang, der konfiguriert ist, um eines der Erregungssignale zu empfangen;
   - die Digitalisierungsschaltung (122) mehrere Integratoren (136) enthält, die jeweils einen Eingang umfassen, der elektrisch mit einem Ausgang eines der Mischer (134) gekoppelt ist, und mehrere Komparatoren (138), die jeweils einen Eingang umfassen, der elektrisch mit einem Ausgang eines der Integratoren (136) gekoppelt ist.

14. Quantenvorrichtung (100) nach Anspruch 2 und einem der Ansprüche 12 oder 13, wobei die Schaltung (116) zum Anwenden der Erregungssignale, die Demultiplexschaltung (120, 142) und die Digitalisierungsschaltung (122) in der Kryostatkammer angeordnet sind.

15. Quantenvorrichtung (100) nach Anspruch 14, wobei:

   - die Kryostatkammer einen ersten Teil enthält, der konfiguriert ist, um bei einer Temperatur von weniger als 1K gehalten zu werden, und einen zweiten Teil, der konfiguriert ist, um bei einer Temperatur zwischen 1K und 4K gehalten zu werden;
   - die Spinqubits, die Elektrometer (104) und der Transimpedanzverstärker (118) im ersten Teil der Kryostatkammer angeordnet sind;
   - die Schaltungen (116) zum Anwenden der Erregungssignale, die Demultiplexschaltung (120, 142) und die Digitalisierungsschaltung (122) im zweiten Teil der Kryostatkammer angeordnet sind.

**16.** Quantenvorrichtung (100) nach einem der vorhergehenden Ansprüche, wobei eine Variation der Konduktanz jedes Elektrometers den Zustand des entsprechenden Spinqubit darstellt.

**17.** Quantenvorrichtung (100) nach Anspruch 16, wobei das Erregungssignal, das am Eingang jedes Elektrometers angewendet wird, einem Signal entspricht, das den Strom ändert, der am Ausgang des Elektrometers erzeugt wird, wobei der Strom, der aus jedem Elektrometer austritt, dem Ausgangssignal entspricht, das an der Ausgangselektrode des Elektrometers geliefert wird.

**Claims**

**1.** A quantum device (100) including at least:

- several spin qubits each comprising at least one quantum dot (102);
- several electrometers (104) each electrostatically coupled to a potential well of the quantum dot (102) of one of the spin qubits;
- circuits (116) for applying at least one AC excitation signal to at least one input electrode (108, 112, 146) of each of the electrometers (104), configured such that a value of at least one parameter from the frequency, phase and maximum amplitude of each of the excitation signals is different from that of the other excitation signals;
- a transimpedance amplifier (118) comprising an input electrically coupled to output electrodes (110, 148), distinct from the input electrodes (108, 112, 146), of at least two of the electrometers (104) to which output signals are to be delivered;
- a demultiplexing circuit (120, 142) including an input electrically coupled to an output of the transimpedance amplifier (118), and configured to demultiplex the output signals to be delivered by the electrometers (104).

**2.** The quantum device (100) according to claim 1, further including a cryostat including a chamber configured to be maintained at a temperature less than or equal to 4K and in which at least the spin qubits, the electrometers (104) and the transimpedance amplifier (118) are arranged.

**3.** The quantum device according to any of the preceding claims, further including circuits (114) for biasing the electrometers (104) configured to apply DC bias voltages to the electrometers.

**4.** The quantum device according to claim 3, wherein the circuits (114) for biasing the electrometers (104) include at least:

- a digital-to-analogue converter (124), configured to receive as an input at least one digital signal coding values of bias voltages of the electrometers (104);
- a demultiplexer (126) comprising an input electrically coupled to an output of the digital-to-analogue converter (124), and several outputs to which the bias voltages of the electrometers are to be delivered;
- sample-and-hold devices (128) each comprising an input electrically coupled to an output of the demultiplexer (126).

**5.** The quantum device according to any of the preceding claims, wherein the electrometers (104) correspond to single electron transistors and/or quantum point contacts.

**6.** The quantum device according to claim 5, wherein:

- when the electrometers (104) correspond to single electron transistors, the circuits (116) for applying excitation signals are coupled to the gate (108) or source (110) or drain (112) of each of the single electron transistors, or are coupled to the gate (108) and source (110) of each of the single electron transistors, or are coupled to the gate (108) and drain (112) of each of the single electron transistors;
- when the electrometers (104) correspond to quantum point contacts, the circuits for applying excitation signals are coupled to a first (146) of two electrodes of each of the quantum point contacts.

**7.** The quantum device according to any of claims 3 and 4 and according to any of claims 5 and 6, wherein the circuits (114) for biasing the electrometers (104) are configured to:

- when the electrometers (104) correspond to single electron transistors, apply DC bias voltages to a gate (108) and a drain (112) of each of the single electron transistors when the circuits (116) for applying excitation signals are coupled to at least one of the gate (108) and the drain (112) of each of the single electron transistors, or to a gate and a source of each of the single electron transistors when the circuits (116) for applying excitation signals are coupled to at least one of the gate and the source of each of the single electron transistors;

- when the electrometers (104) are quantum point contacts, apply DC bias voltages to the first (146) of both electrodes of each of the quantum point contacts.

8. The quantum device (100) according to any of the preceding claims, wherein

- the qubits are arranged to form a qubit matrix; and
- each of the circuits (116) for applying at least one excitation signal is configured to apply the same excitation signal to the input electrodes (108, 112) of electrometers (104) coupled to qubits arranged on the same line of the qubit matrix.

9. The quantum device according to claim 8, wherein the electrometers (104) are arranged by forming a matrix of electrometers (104) arranged facing the matrix of qubits such that the quantum dot (102) of each of the qubits is electrostatically coupled to a quantum dot (106) of one of the electrometers.

10. The quantum device according to claim 8 or 9, wherein the output electrodes (110) of electrometers coupled to qubits arranged on a same column of the matrix of qubits are coupled to the input of a same transimpedance amplifier.

11. The quantum device according to any of claims 8 to 10, wherein:

- each of the circuits (116) for applying at least one excitation signal, forms a first circuit for applying at least one first excitation signal configured to apply a same first excitation signal to first input electrodes of electrometers coupled to qubits arranged on a same row of the matrix of qubits;
- the quantum device (100) further includes second circuits (144) for applying at least one second excitation signal, each configured to apply a same second excitation signal to second input electrodes of electrometers coupled to qubits arranged on a same column of the matrix of qubits;
- said first and second application circuits (116, 144) are configured such that a value of at least one parameter from the frequency, phase and maximum amplitude of each of the first and second excitation signals is different from that of the other excitation signals;
- the input of the transimpedance amplifier (118) is electrically coupled to an output electrode of each of the electrometers.

12. The quantum device according to any of the preceding claims, further including:

- a digitising circuit (122) comprising inputs coupled to outputs of the demultiplexing circuit (120) and configured to digitise the output signals to be delivered from the demultiplexing circuit, or
- an analogue-to-digital converter (140) interposed between the input of the demultiplexing circuit (142) and the output of the transimpedance amplifier (118).

13. The quantum device according to claim 11, wherein, when the quantum device includes the digitising circuit:

- the demultiplexing circuit (120) includes several mixers each comprising a first input electrically coupled to the output of the transimpedance amplifier and a second input configured to receive one of the excitation signals;
- the digitising circuit (122) includes several integrators each comprising an input electrically coupled to an output of one of the mixers (134), and several comparators each comprising an input electrically coupled to an output of one of the integrators (136).

14. The quantum device (100) according to claim 2 and according to one of claims 12, or 13, wherein the circuits (116) for applying at least one excitation signal, the demultiplexing circuit (120, 142), and the digitizing circuit (122) are arranged in the cryostat chamber.

15. The quantum device according to claim 14, wherein:

- the cryostat chamber includes a first part configured to be maintained at a temperature of less than 1K and a second part configured to be maintained at a temperature between 1K and 4K;
- the spin qubits, electrometers (104) and transimpedance amplifier are arranged in the first part of the cryostat chamber;
- the circuits (116) for applying excitation signals, demultiplexing circuit (120, 142) and digitising circuit (122) are arranged in the second part of the cryostat chamber.

16. The quantum device (100) according to one of the preceding claims, wherein a variation in the conductance of each electrometer represents the state of the corresponding spin qubit.

17. The quantum device (100) according to claim 16, wherein the excitation signal applied to the input of each electrometer corresponds to a signal modifying the current generated at the output by said electrometer, the current output from each electrometer corresponding to the output signal delivered on the output electrode of said electrometer.

FIG.1

FIG.2

FIG.3

FIG.4

FIG.5

FIG.6

FIG.7

FIG.8

FIG.9

FIG.10

FIG.11

FIG.12

FIG.13

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Littérature non-brevet citée dans la description**

- Qubit read-out in Semiconductor quantum processors: challenges and perspectives. **T. MEUNIER et al.** 2019 IEEE International Electron Devices Meeting (IEDM). IEEE, 07 Décembre 2019
- **D.J. REILLY et al.** Fast single-charge sensing with a rf quantum point contact. *APPLIED PHYSICS LETTERS,* 2007, vol. 91, 162101
- **M. E. P. V. ZURITA et al.** Cryogenic Current Steering DAC With Mitigated Variability. *IEEE Solid-State Circuits Letters,* 2020, vol. 3, 254-257
- **L. LE GUEVEL et al.** 19.2 A 110mK 295μW 28nm FDSOI CMOS Quantum Integrated Circuit with a 2.8 GHz Excitation and nA Current Sensing of an On-Chip Double Quantum Dot. *ISSCC,* 2020
- **L.S. LAI et al.** An experimental Ultra-Low-Voltage Demodulator in 0.18-μm CMOS. *IEEE Transactions on Microwaves and Techniques,* Octobre 2009, vol. 57 (10
- **H. ZHAO et al.** A low-power cryogenic analog to digital converter in standard CMOS technology. *Cryogénies,* 2013, vol. 55-56, 79-83
- **J. MASCIOTTI et al.** Digital Lock-In Détection for Discriminating Multiple Modulation Frequencies With High Accuracy and Computational Efficiency. *IEEE Transactions on Instrumentation and measurement,* Janvier 2008, vol. 57 (1